(19) **Europäisches Patentamt / European Patent Office / Office européen des brevets**

(11) **EP 2 921 693 A1**

(12) **EUROPEAN PATENT APPLICATION**
published in accordance with Art. 153(4) EPC

(43) Date of publication:
**23.09.2015 Bulletin 2015/39**

(21) Application number: **13849797.9**

(22) Date of filing: **22.10.2013**

(51) Int Cl.:
*F03B 9/00* (2006.01)      *F03B 7/00* (2006.01)
*F03B 13/26* (2006.01)

(86) International application number:
**PCT/JP2013/078588**

(87) International publication number:
**WO 2014/065282 (01.05.2014 Gazette 2014/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.10.2012   JP 2012232758**

(71) Applicant: **Shimizu, Tadao**
**Ishikawa 921-8012 (JP)**

(72) Inventor: **Shimizu, Tadao**
**Ishikawa 921-8012 (JP)**

(74) Representative: **TBK**
**Bavariaring 4-6**
**80336 München (DE)**

(54) **BOTTOMLESS CUP TYPE WATER POWER CONVERSION DEVICE USING FLOWING WATER ENERGY**

(57)   To provide a water power conversion device which enables low cost, no pollution, and large-capacity power generation by solving the disadvantages of a lift type using a drag type waterwheel. [Solution] The present invention is an underwater waterwheel, the waterwheel being a rotary waterwheel that rotates about a rotating shaft or an endless chain waterwheel in which a continuous belt is stretched between a pair of escape wheels, and the present invention is characterized in that a bottomless cup is pivotally fitted by a pivot on an outer wheel of the rotary waterwheel or on the continuous belt of the endless chain waterwheel so as to be able to stand up or lie down, in the state where the outer wheel or the continuous belt advances in the same direction as the direction of flowing water, the bottomless cup goes into a standing state, the bottom of the cup is closed by a bottom plate provided on the outer wheel or the continuous belt, and the cup functions as a water-receiving cup having high flowing water resistance, in the state where the outer wheel or the continuous belt advances in the reverse direction to the direction of flowing water, the bottomless cup goes into a lying down state, the bottom of the cup goes into an open state, thereby flowing water resistance becomes lower, the bottomless cup rotates or circulates by the resistance difference between both the states, and by providing a water-blocking plate on the upstream side on which the bottomless cup goes into the lying down state, a stagnant water area is formed in the reverse advance path to cause centrifugal force to act on the bottomless cup and turn the bottomless cup from the lying down state to the standing state.

[Fig. 1]

**Description**

**Technical Field**

The present invention relates to a water power conversion device that converts the energy of flowing water to rotational force, and more specifically to a drag-type underwater waterwheel and underwater endless chain waterwheel.

**Background Art**

Various methods to generate power using oceanic energy have been presented, but as far as the method to convert the water power of flowing water, which is the basics of oceanic energy, is concerned, lift-type vane wheels are still in the testing stage at the moment.

As for drag-type waterwheels, none of the methods to allow these waterwheels to be used underwater as presented in Non-patent Literature 1 have been commercialized, and drag-type waterwheels presented in Patent Literature 1 are not feasible due to concerns over large losses occurring at the drawing port.

In other words, while the methods to utilize the kinetic energy of fluid are largely classified into the lift type and drag type, the lift type is characterized by the rotating shaft positioned in parallel with the flowing direction, whereas the drag type is characterized by the rotating shaft crossing at right angles with the flowing direction, where no drag-type waterwheels can be used underwater and no data is available yet on underwater use of lift-type waterwheels.

Accordingly, the problems can be explained as follows using general-purpose wind power generators as representative examples: lift-type wind power generation is a method to obtain and utilize the maximum kinetic energy, but the maximum power generation volume of one wind power generator is limited partly because excess energy can be controlled only by means of cutoff, and partly because the adaptive flow velocity range is narrow due to stalling.

Furthermore, because the plane of rotation forms a single disk, high-speed rotation creates disturbance that in turn prevents the blade effect from being achieved, and therefore the blade width and number of blades are kept small as described in Non-patent Literature 2; however, this leads to a contradictory result of increasing the dead flow volume that flows through gaps between the blades and thus exerts no power at all and the efficiency falls between 30 and 40%, while generating motive power of large power and small torque is not suitable for generators that require large torque.

Moreover, generators positioned side by side cannot be connected together, which makes it impossible to achieve high-capacity power generation, and a forest of many generators cannot reduce the cost.

Patent Literature 1: Japanese Patent No. 4917690
Non-patent Literature 1: Haryoku Hatsuden (Genri Kara Ouyou Made) - Kairyuu/Chouryuu Hatsuden Shisutemu (Wave Power Generation (Operating Principles to Applications) - Oceanic Current/Tidal Current Generation Systems), P7, Power Co., Ltd.
Non-patent Literature 2: Zukai Fuuryoku Hatsuden No Subete - Fuusha No Kiso Chishiki (Illustrated Guide: All You Need to Know About Wind Power Generation - Basics of Windmills), P48, Kogyo Chosakai Publishing Co., Ltd.

**Summary of the Invention**

**Problems to Be Solved by the Invention**

The object of the present invention is to provide a low-cost, pollution-free water power conversion device capable of high-capacity power generation by solving the aforementioned difficulties associated with the lift type through use of a drag-type waterwheel.

**Means for Solving the Problems**

The water power conversion device pertaining to the present invention is an underwater waterwheel, wherein the waterwheel is a rotary waterwheel that rotates about a rotating shaft or an endless chain waterwheel in which a continuous belt is stretched between a pair of escape wheels, and the present invention is characterized in that a bottomless cup is pivotally fitted by a pivot on an outer wheel of the rotary waterwheel or on the continuous belt of the endless chain waterwheel so as to be able to stand up or lie down, and in the state where the outer wheel or the continuous belt advances in the same direction as the direction of flowing water, the bottomless cup goes into a standing state, the bottom of the cup is closed by a bottom plate provided on the outer wheel or on the continuous belt, and the cup functions as a water-receiving cup having high flowing water resistance, while in the state where the outer wheel or the continuous belt advances in the reverse direction to the direction of flowing water, the bottomless cup goes into a lying down state, the bottom of the cup goes into an open state and thus the flowing water resistance becomes lower, the bottomless cup rotates or circulates by the resistance difference between the two states, and by providing a water-blocking plate on the upstream side on which the bottomless cup goes into the lying down state, a stagnant water area is formed in the reverse advance path to cause centrifugal force to act on the bottomless cup and turn the bottomless cup from the lying down state to the standing state.

As a result, the bottomless cup functions as a bottomed cup to absorb flow energy in the forward advance path in which the cup receives the flow of flowing water and advances, while the bottomless cup allows the flowing water to pass through its open bottom in the reverse advance path in which the cup resists the flow of flowing water, and consequently the waterwheel rotates continuously even in water.

In addition, formation of the stagnant water area by providing the water-blocking plate forward of the reverse advance path of the bottomless cup reduces the power of water flowing against the rear face of the pressure-receiving plate of the bottomless cup.

With single-shaft waterwheels or drag-type waterwheels using a continuous belt, etc., where the waterwheel rotates due to the resistance difference between the forward advance path and reverse advance path of the water-receiving cup, it has been difficult to increase the resistance difference when the waterwheel is completely submerged in water.

In the case of known continuous chain waterwheels, turning of the cup from the standing state to the lying down state requires a rotation of approx. one right angle, but turning from the lying down state to the standing state requires a rotation of approx. three right angles, and also because the rear face of the pressure-receiving plate is pressed by flowing water, solving the problems associated with the cup turning method has been difficult; under the present application for patent, however, the center of gravity of the bottomless cup is far away from the pivot and thus the cup is turned by centrifugal force, and therefore, in flowing water, the cup is caused to partially stand by means of centrifugal force in the stagnant water area created by the water-blocking plate, and the next inflow water jet is caused to hit the inner side of the cup to make it stand.

In addition, the bottomless cup functions as a bottomed cup to absorb flow energy in the forward advance path in which the cup receives the flow of flowing water and advances, while the bottomless cup allows the flowing water to pass through its open bottom in the reverse advance path in which the cup counters the direction of flowing water, and consequently rotational force generates due to the resistance difference in the two states, thereby enabling a drag-type waterwheel that operates in both the vertical and horizontal configuration and rotates or circulates continuously even when the waterwheel is submerged in water.

It should be noted that, because a drag-type waterwheel works effectively when flowing water hits a pressure-receiving plate 6a, the drag of the bottomless cup placed in flowing water is expressed by $D_1 = C_{D1} \times S_1 \times K_1$ in the standing state, or by $D_2 = C_{D2} \times S_2 \times K_2$ in the lying down state, where D represents the generated drag, $C_D$ represents the coefficient of drag, S represents the projected area, K represents the dynamic pressure (Pa) expressed by $K = 1/2 \times \rho \times U^2$, U represents the flow velocity in the outside field, and $\rho$ represents the density of fluid.

When the two equations are compared, S1 > S2, while $C_{D1} > C_{D2}$, which means that D1 » D2and the resulting large drag difference allows the waterwheel to rotate.

Next, a look into the ratios of the respective pairs of coefficients reveals that the ratio of projected areas RS, or $S_1/S_2$, runs into several dozen times in terms of the ratio of the maximum area of the pressure-receiving plate and the thickness of the plate, while the ratio of coefficients of drag RCD, or $C_{D1}/C_{D2}$, is 4 in the case of a semi-spherical cup because $C_{D1}$ is 1.33 and $C_{D2}$ is 0.33 with this cup, but this ratio becomes equal to or greater than 4 with a bottomless cup because the plate is curved.

This means that both RS and RC$_D$ become large and consequently the drag ratio of D1/D2 = (RC$_D$ x RS) x K becomes considerably large, far exceeding the lift-to-drag ratio associated with blades demonstrating good performance.

Accordingly, a wide flow velocity range is supported, Betz's maximum efficiency no longer applies, and the flow velocity of the outside field can be utilized to achieve greater energy, which is practical.

Compared to lift-type blades, drag-type cups are easier to fabricate.

Note that, in the reverse advance pipe path, the pressure-receiving plate of the bottomless cup travels roughly in parallel with flowing water, so the cross-section area and coefficient of resistance both become small and the drag becomes low.

The present invention may be an endless chain waterwheel comprising a path surface of a continuous belt formed all around a center body having underwater buoyancy, with the continuous belt positioned in a circulating manner, as well as an escape wheel fixed at each of the two ends of an escape wheel shaft fitted in a manner passing through the center body from side to side; wherein such endless chain waterwheel converts flowing water energy to a rotational force of the escape wheel shaft by causing projecting shafts formed on both sides of the continuous belt to mesh with sprockets provided on the escape wheels.

This way, the flowing water path can be divided into the forward advance path and reverse advance path using the continuous belt and the length of the water flowing path can be easily adjusted according to the length of the belt.

In addition, the structure where the sprockets of the escape wheels are meshed with the projected shafts provided on the continuous belt makes it difficult for floating contaminants, seaweeds, etc., to get tangled up with the device.

As the continuous belt circulates all around the center body in the vertical direction, the body enters a suspended state, and therefore multiple escape wheel shafts are passed through the body and fixed and supported with bearings provided on the vertical bulkhead.

Here, the center body is extended forward and upward from the escape wheel on the upstream side and the bottom face of this area is inclined in the reverse direction, with a small lead wheel provided in this forward extended area; however, the bottomless cup may be rotated by shaping the inner side of the water-blocking plate as a cylinder of small inner diameter, by using the reverse inclined surface in a weak flow velocity range, or by providing a tensioner near the small lead wheel.

When the third escape wheel shaft is passed through the center body and a lead wheel of small diameter is provided, the angular velocity of the continuous belt increases and the centrifugal force that acts on the bottomless cup is boosted.

Also, the water-blocking plate can be integrated with the device and the inner side of this integrated structure shaped as a cylinder of small inner diameter, with the tip of the bottomless cup made smaller than the freely-rotating outer diameter, so that the outer surface of the pressure-receiving plate rotates as it is pressed by the cylindrical surface and then suddenly released by guide rollers provided at the exit of the cylindrical surface, because this allows for instantaneous force to generate due to double-actions of the angular velocity around the lead wheel shaft and angular acceleration around the pivot, thereby boosting the turning force of the bottomless cup.

In addition, a tensioner may be provided between the small lead wheel and the escape wheel on the upstream side as to haul the circulating continuous belt toward the inner side and thereby apply rotational force to the bottomless cup to turn the bottomless cup into the standing state without having to provide the water-blocking plate, or a reverse inclined surface may be formed near the small lead wheel, oriented in the direction of causing the bottomless cup to stand by its own weight.

The present invention does not limit in any way how rotational output is taken out, and it is possible, for example, to use speed conversion gears or one-way clutch, or both, in the transmission system connecting the driving gear installed coaxially with the escape wheel and the output shaft to which power is transmitted.

The lead wheel and tensioner are assembled in two levels and the continuous belt is loosely suspended beforehand and then the continuous belt is spooled around the lead wheel to cause the cup to stand, or the reverse inclined surface is formed in such a way to let the pivot-supported bottomless cup fall naturally so that the cup turns completely, even at low flow velocity and stands up fully.

Under the present invention, two or more endless chain waterwheels can be connected together in parallel using connecting parts and arranged in a floating state to construct a long device, where an external buoyant body with a support column and mooring parts is provided separately and the connecting parts are connected to the support column and mooring ropes are tightly bound to the mooring parts so that rotational force generating in the escape wheel shaft provided in each of the waterwheels is output to a common shaft.

Under the present invention, which is a resistance-type waterwheel where the rotational shaft of the continuous belt runs at right angles with the direction of flow, the theoretical power generation volume P is given by $P = \rho Q U^2 / 2$ (W), where U represents the flow velocity in the outside field (m/s), $\rho$ represents the mass (kg/m$^3$), Q represents the volumetric flow velocity (m$^3$/s) and P represents the kinetic energy (J/s = W), meaning that the theoretical power generation volume P is proportional to Q or the amount of water that flows in.

Accordingly, by connecting many endless chain waterwheels using connecting parts and then arranging them in parallel in a floating state to construct a long device, torques obtained by the respective devices are collected to one common shaft to generate large angular momentum, where the lifting state of the devices allows a large amount of flowing water to be obtained which has high energy density in its surface layer.

By providing an external buoyant body having a support column and mooring parts on each of the two ends of the long device and then fixing the connecting parts (linking parts) to the support column and mooring the external buoyant body with the mooring parts and anchors, the long device will be fixed in water in a floating state by resisting the pressure of flowing water, thereby demonstrating high power generation capacity and consequently lowering the cost of generation.

In addition, by providing external buoyant bodies to jointly bear with the intermediate supports the external forces applied during mooring, the device can comprise an array of identical products and this enables mass production.

In the case of lift-type waterwheels, on the other hand, waterwheels arranged side by side cannot be connected together, and therefore making each waterwheel bigger and using it in a standalone state is the only way to achieve high power generation capacity, which prevents lowering of economical cost.

Under the present invention, multiple escape wheel shafts of an endless chain waterwheel can be put together into one common driving shaft having a practical length to construct a short device, and then such short devices can be arranged side by side with a space formed, as a gear chamber, between the vertical bulkheads of adjacent short devices, with speed change gears and a one-way clutch set in each gear chamber along the torque transmission path from the common driving shaft to the common shaft.

Under the present invention, the circulation path of the continuous belt as it is fully submerged in water can be divided into two paths on the upper side and lower side, where each path has a flow inlet and flow outlet at the two ends and the flow outlet is provided with a movable or fixed water-blocking plate, so that, of the upper path and lower path, one functions as a forward advance path through which water flows in from the flow inlet, while the other functions as a reverse advance path in which water is prevented from flowing in and the bottomless cup is turned, with the water-blocking plates used to automatically switch their functions alternately.

With the continuous belt, dividing its circulation path into two paths of upper and lower levels causes both paths to open in water; therefore, the flow inlets of the two paths are positioned at the front and rear of the device and the approach flow and return flow are guided to the respective flow inlets using the water-blocking plates, so that each pipe path functions as either the forward advance path or reverse advance path, with the paths alternating their functions as the forward advance path and reverse advance path every time the direction of flow reverses.

The pipe path allows its inlet and outlet to open when functioning as the forward advance path, and closes the inlet or guides flow in the outside field to the inlet while turning the bottomless cup at the outlet when functioning as the reverse advance path.

The water power conversion device that utilizes approach/return flows is achieved by making sure the continuous belt always rotates in the same direction regardless of the direction of flow.

The circulation path of the continuous belt is divided into two paths on the upper side and lower side and the two ends of each path are designated as the flow inlet and flow outlet, with the inlet and outlet oriented in the opposite directions.

The upper and lower flow outlets are each installed with a water-blocking plate whose opening and closing is automatically controlled, to open the outlet to release the water flowing in from the flow inlet, or close the outlet to block water entering from the opposite side.

Since the waterwheel is fully submerged in water, the front and rear flow inlets are open in water to accommodate both approach and return flows, and since the water-blocking plate on the other end of each path opens and releases the water flowing in from either side, a forward advance path is formed and driving power is obtained.

At the flow inlet on the side where the bottomless cup rotates downward, a reverse inclined surface is used to let the bottomless cup fall naturally; whereas, on the side where the cup rotates upward, the aforementioned two levels of lead wheels are used to make sure the cup rises on its own regardless of which side the water flows in from.

The paths operate as open water paths, but a water conduit dock can be formed using top/bottom plates or using a bottom floor plate to protect the cup from floating objects, or a pressure pipe path can be formed to improve efficiency.

The water-blocking plate whose opening and closing is automatically controlled is of the movable type when used against long-cycle tidal current, with the plate controlled according to the specific gravity difference from water, and flow velocity, of the tidal current; whereas, when used against short-cycle wave current, a fixed arm of louver door structure (hereinafter referred to as "slit") is used instead and the plate remains stationary to dramatically decrease the incidence of breakdown.

The water-blocking plate whose opening and closing is automatically controlled is such that, if of the movable type, the sinking type is used on the upper level, while the floating type is used on the lower level, with each plate opened and closed according to the specific gravity difference from water, and flow velocity level, of the tidal current.

If the water-blocking plate is of the fixed type, a thick, curved wooden arm (hereinafter referred to as "arm") having grooves engraved in the same direction is used, where the shape of the arm and inclination angle of the slit groove are adjusted to reflect the water flowing in from the outside field and guide it to the other flow inlet.

On the other hand, water flowing in from the flow inlet is released to the outside using the inclination angle of the same slit and sufficient concave part.

While the lift type can only utilize water flowing in one direction, the fully submerged waterwheel utilizes approach/return flows to double the efficiency.

The function of the forward advance path is to open the inlet and outlet of the pipe path, while the function of the reverse advance path is to close the inlet or guide the flow in the outside field and turn the bottomless cup at the outlet.

Under the present invention, the underwater waterwheel or endless chain waterwheel can comprise a combination of device component members that are made with watertight, lightweight concrete which in turn is constituted by large and small hollow bodies with sealed surface shell wall (hereinafter referred to as "sealed hollow bodies") that are blended with watertight cement binder to an appropriate grain size distribution, or it can comprise a steel-reinforced structure assembled from the watertight, lightweight concrete and watertight, lightweight ferroconcrete that are combined to create a structure having a sealed compartment, so that the waterwheel floats on its own.

Watertight, lightweight concrete is a concrete complex using cement binder, and since its performance, specific gravity, and strength are adjustable according to the blended materials and their blending ratios, watertight cement binder can be used to achieve highly durable concrete that does not neutralize or deteriorate, while the apparent specific gravity of the sealed hollow bodies to be blended can be kept low so that they function as buoyant materials that do not absorb water in the cement binder, and the watertight, lightweight concrete can use hollow bodies having appropriate pressure-resistant strength according to the depth at which it will be used.

In addition, the grain size distribution of large and small sealed hollow bodies can be adjusted to raise the fill ratio, to produce super-lightweight, watertight concrete that does not absorb water but maintains the same specific gravity or durability in water and also floats in water.

In a location where great buoyancy is required, a sealed compartment is created to generate buoyancy using watertight, lightweight ferroconcrete integrally connected with a steel-reinforced structure that resists outer forces.

Watertight, lightweight concrete uses sealed hollow bodies selected from among various types of buoyant materials, where the various sealed hollow bodies include fine hollow bodies, hollow multi-locular bodies, hard hollow bodies, and foamed resin bodies of low foaming ratio, among others, and desired sealed hollow bodies are selected from the foregoing and/or processed to obtain those suitable for the purpose.

Also, watertight cement binder contains various waterproofing agents, rubber latex, resin emulsion-blended polymer cement, etc.

By allowing the device to float on its own using watertight, lightweight concrete as explained above, the shape and design flexibility will increase to make it possible to produce a complex device and do so in smaller size.

Also, unlike when normal concrete is used, strong alkalinity is not released in water to create pollution, and because the device itself floats on its own, there are no connections with external buoyant bodies and consequently wash-away accidents will dramatically decrease, while the construction works will become easy, and lower-priced products can be mass-produced.

In addition, use of watertight, lightweight concrete allows the wall thickness to be reduced from the excessive dimensions used on conventional devices, while the lighter concrete eliminates the need for buoyancy creating space to cut down the water displacement.

The traditional approach for floating piers or other large structures has been to create a casing body using normal concrete and then fill the space inside with Styrofoam or other molded products to generate self-buoyancy, where the wall thickness is increased to protect the concrete against deterioration by permeating water so that the structure will last for a specified number of useful years.

In addition, normal concrete is too heavy (specific gravity $\rho = 2.3$) to be used for small structures that float.

Furthermore, lightweight concrete ($\rho = 1.3$ to $1.9$) cannot be used in water because the lightweight aggregate used absorbs water.

Accordingly, floating a device, etc., requires using external buoyant bodies of general-purpose/standard sizes made of impermeable material to suspend or interlock/support the main body, but many wash-away accidents occur as the connecting parts are damaged or bonding materials are deformed/fractured.

A self-buoyant water power device has a contour subject to low fluid resistance, and because the device can be made smaller, flowing water of high flow velocity and high energy density can be utilized.

Also, such smaller device requires less material/construction cost, makes it easier to float and tow the device, and costs less to conduct engineering works on it.

In addition, the endless chain waterwheel can be provided inside the space between a top plate and a bottom floor plate, and sprockets of escape wheels provided at the center of the endless chain waterwheel are meshed against projecting shafts on the continuous belts circulating along the upper and lower paths, with the torque transmission gears stored in the aforementioned gear chamber and the thick, heavy, common shaft lowered to the bottom floor plate, where the top plate can be given buoyancy to float on its own, while the bottom floor plate can be made of watertight, heavy concrete as necessary.

When used against wave current of short wavelength, one escape wheel is provided at the center of the device to shorten the circulation path of the continuous belt, and because this allows a large weight restoration force to act between a large buoyancy at the very top and a heavy object installed at the very bottom, any oscillation caused by wave current is stably suppressed by the device itself so that the energy of the wave flow can be utilized.

In other words, while the only way to suppress oscillation caused by wave current has heretofore been to increase the length of the vessel in an attempt to stop pitching, the present application for patent proposes a device that is shorter but still suppresses oscillation in order to capture and utilize the kinetic energy of wave current.

$S = W \times GZ = W \times GM \times \sin\theta$ is a general equation of restoration force.

In the above equation, W represents the gravity (water displacement), $\gamma V$ represents the buoyancy, M represents the metacenter, G represents the center of gravity, B represents the center of floatation, GZ represents the righting lever (vertical line drawn from G to the line of action of buoyancy), GM represents the metacenter height (distance between G and M), and $\theta$ represents the inclination angle of the vessel.

This equation is used for initial restoration forces for small $\theta$, while the equation below is used for large-angle restoration forces:

$$S = W \times GZ = W \times (BR - BQ) = W \times (BR - BG \times \sin\theta)$$

In the above equation, GZ represents the righting lever, B represents the center of floatation when the inclination angle is 0, Bθ represents the center of floatation after inclination, Mθ represents the metacenter after inclination, BR represents the vertical line drawn from B to the line of action of buoyancy at BθMθ, and BG represents the distance from B to G.

In the above equation, the first term, W x BR, relates only to the vessel type.

Also, the second term, W x BQ, is called the weight restoration force and relates only to the height of the center of gravity.

The present application for patent aims to increase BG (distance from B to G) in the above equation to cause a weight restoration force to act on the device, and this is achieved by setting a large distance between the large buoyancy at the very top and the heavy object installed at the very bottom.

In other words, oscillation is suppressed by the weight restoration force, and if necessary, the bottom floor plate can be made of watertight heavy concrete of high specific gravity to lower the center of gravity more.

In addition, the rotating direction of the continuous belt is adjusted upward with respect to the direction of wave, so as to shorten the circulation path and thereby achieve better adherence to the movements of water grains of short-cycle wave current.

The sprockets of escape wheels are meshed simultaneously with the continuous belt circulating along the upper and lower paths in order to transmit power without causing the belt to generate slack, so that even if the escape wheels rotate excessively, the bottomless cup can still be used in the reverse flow and no problems will be encountered.

Furthermore, the external buoyant body can have a partially submerged shell structure integrally comprising a laterally long spindle-type pressure-resistant submersible shell and a thin, long column projecting above the water surface: wherein the exterior of the pressure-resistant submersible shell can have a support column and mooring parts; the interior of the pressure-resistant submersible shell can have a partially submerged work chamber and an opening to the water on the outside; and the inside bottom of the shell can be made as a partially submerged platform where ballast or heavy objects can be loaded.

External buoyant bodies that float and secure a long device are normally support columns assembled on a work barge, but because the barge oscillates due to water flows and wave forces and also because these support columns move differently on either side of the long device, it is difficult for them to support the device at fixed points; to install a heavy power generator, etc., on a barge, however, a large water displacement is needed to achieve a large area of water plane and shape restoration force, but since a larger barge receives greater wave forces in rough weather to necessitate stopping of work or evacuation, the barge must be made even larger to continue with the power generation, and no solution has heretofore been available to break this vicious cycle.

$$S = W \times GZ = W \times (BR - BQ) = W \times (v \times hh' / V - BQ)$$

In the equation of large-angle restoration force above, W x BR in the first term is called the "shape restoration force."

Here, BR represents the horizontal moving distance of the center of floatation.

Now, when the vessel is inclined, the inclination creates exposed areas and submerged areas and the volume of the vessel in this state is given by v, while the moving distance of the center of floatation at this volume is given by hh'.

BR, or the horizontal moving distance of the center of floatation, is calculated by hh' x v/V.

This is a second moment with respect to a vertical axis passing through the center of floating surface on the water plane.

In other words, increasing the weight restoration force decreases the shape restoration force, which effectively minimizes the area of water plane, meaning that the aforementioned problem is solved by a thin, long column shape.

Minimizing the shape restoration force of BR using a thin, long column improves the wave permeability and prevents wave forces from acting.

Even when overtopping waves occur due to a small area of water plane, the vessel will oscillate less.

The heavy power generator is installed at the bottom so that it can exert a stabilizing force, and the vessel is also made smaller, and consequently the fluid resistance is reduced.

By keeping the area of water plane small, the wave permeability improves.

Wave forces no longer act, and consequently wave-triggered oscillation is eliminated.

Stability and resistance are ensured against wave forces.

The search for a vessel shape resistant to wave forces is over, with the answer being a small area of water plane according to the vessel shape term in the equation above.

On the other hand, the partially submerged platform works the opposite way to the work barge in that, as the area of water plane is reduced to minimize the shape restoration force, the wave permeation improves and wave forces no longer act, so that unnecessary stress no longer applies to the long device, while the heavy power generator is installed at the bottom so that it can exert a stabilizing force, and the vessel is also made smaller, and consequently the fluid resistance is reduced.

In addition, a smaller area of water plane reduces the amount of portable ballast needed to float and sink the long device, thereby allowing for efficient loading and unloading of ballast.

Moreover, the partially submerged platform is moored at fixed points to conduct oceanic work on it, where, in a submerged state its pressure-resistant shell receives low fluid forces and is thus affected less by high winds and waves at sea, but when the shell is connected to above the seawater surface through a column, a partially submerged work space is created where the long device is connected by way of the opening in water or the common shaft is connected underwater, and since equipment to warn navigating ships is installed in the part of the column above the seawater surface, an emergency evacuation route is secured at all times to ensure safety.

The thin, long column allows for easy adjustment of buoyancy and submersion depth, as well as easy floating and sinking, even enabling floating to the shallow draft position, while at the same time it minimizes the shape restoration force to suppress oscillation against wave current.

The present invention may be an endless chain waterwheel according to Claim 2, wherein: the forward advance path has multiple pressure-receiving members that move inside a water conduit closed by the surrounding wall surfaces and path surface in a manner shielding the interior section of the water conduit, as well as a sheet-shaped belt running along the path surface in a manner sealing between the top and bottom spaces; the sheet-shaped belt has multiple shafts projecting from both ends; the shafts have coasters; the coasters are connected together in a manner sliding while blocking water; and the pressure-receiving members are pivoted above the sheet-shaped belt, while an endless chain travels below the sheet-shaped belt in a manner being lubricated by water, so as to provide an output means for converting circulating traction force and traveled distance to rotating force.

This configuration, which is that a pipe path running along the water flow is used whose openings at both ends are closed (hereinafter referred to as "pressure pipe"), that multiple insertion cocks are provided inside the pressure pipe so that they move while shielding the section inside the pressure pipe, that the insertion cocks are connected together at equal intervals to form an endless chain, and that an output means is provided that converts the circulating traction force and traveled distance of the endless chain to rotating force, allows the kinetic energy of flowing water to be converted to flow work (pressure energy) of an equal amount and the power expressed by the equation below is produced, and this function of a pressure-type conversion device reduces the flow velocity inside the pipe and improves the efficiency.

The proposed equation is as follows:

$$W / \delta t = (K - P) \times A \times V = (K - P) \times Q = Ft \times V$$

In this equation, U represents the flow velocity of the outside field (m/s), K represents the inflow dynamic pressure at flow velocity U (Pa) expressed by $K = 1/2 \times \rho \times U^2$, $\rho$ represents the density of fluid (kg/m$^3$) which is specifically 1000, P represents the outflow dynamic pressure (Pa) expressed by $P = 1/2 \times \rho \times V^2$, A represents the cross-section area inside the pressure pipe equal to the cross-section area of the insertion cock or pressure-receiving plate (hereinafter abbreviated as "cock") (m$^2$), V represents the flow velocity inside the pipe or travel speed of the cock (m/s), Q represents the flow velocity inside the pipe (m$^3$/s) expressed by $Q = A \times V$, and Ft represents the resistance force (tensile force applied in the direction opposite the flow inside the pipe) (N), and because L represents the traveled distance (m) expressed by $L = V \times \delta t$, the work W (J) is given by Ft x L, while the power W/$\delta t$ (J/s) is given by $W/\delta t = Ft \times V$.

In other words, blocking the flowing water inside the pressure pipe with the insertion cock causes the dynamic pressure K to generate inside the pipe and the dynamic pressure force Fk (N) expressed by $Fk = K \times A$ to apply to the cock, but because the resistance force Ft is applied to the insertion cock through the endless chain, a steady state expressed by $Fk - Ft = Fp$ is achieved, where the outflow force Fp (N) is applied at the flow outlet, the outflow dynamic pressure P is $P = Fp/A$, and the outflow velocity V is $V = (2 \times P/\rho)^{1/2}$.

When the flow velocity inside the pipe V generates, the insertion cock moves at the same speed and the resistance force Ft moves at the speed of V, and therefore the power of Ft x V is produced according to the definition.

In addition, applying a load to the endless chain and thereby changing the resistance force Ft adjusts V automatically by means of the outflow force Fp because Fk is a stagnant pressure and constant external force, and consequently the traveled distance L changes according to the power.

As illustrated above, in pressure-type water power conversion the power (W/δt) due to pressure energy is calculated by multiplying the dynamic pressure difference between the inlet and outlet (K - P) by the flow velocity inside the pipe Q, which also corresponds to the total kinetic energy and naturally agrees with the law of energy preservation, as well.

Traditionally in Bernoulli's theorem, which involves kinetic energy, potential energy and pressure energy, only pressure energy has been believed to be non-mechanical energy although all three energies have the same dimension; however, the present application for patent reverses this belief, which is significant.

Next, a lift-type waterwheel utilizes kinetic energy for power conversion and therefore its maximum efficiency conforms to the limit 59.3% according to Betz's law; whereas, in pressure-type power conversion, it is such that the lower the circulating velocity V (m/s) of the belt, the greater the power becomes according to the proposed equation, which makes it feasible to achieve high efficiency beyond the limit.

Also under the present application for patent, to obtain a pressure-type power conversion device as shown in the proposed equation, the coasters installed at the shafts are interconnected with the previous/next ones to block the traveling grooves of the projecting shafts and maintain internal pressures in the sections separated by the multiple pressure-receiving members, in order to achieve water-lubricated traveling below the sheet-shaped belt which is sealing between the top and bottom spaces, while the bypassed flowing water is stopped between the belt and the aforementioned curved shaft surface of the lead wheel.

In addition, the lift type whose efficiency is improved in the form of maximum flow velocity or maximum rotational speed is subject to large limit loss and resistance loss.

On the other hand, the pressure type utilizes the maximum energy based on the flow velocity in the outside field, which is a stagnant point pressure, and therefore decreasing the flow velocity inside the pipe or the circulating velocity increases the efficiency, and for this reason turning is possible even at weak flow velocity as mentioned earlier, and the high torque obtained at low-speed rotations is accelerated by the speed conversion gears and transmitted from the common shaft to the power generator shaft to be converted to electric power at the specific high efficiency of the power generator.

It should be noted that, while the flow velocity range accommodated by the lift type is narrowly limited due to stalling, cutoff, etc., the pressure type accommodates high-energy flowing water and maximum load without problem because the pressure-receiving members of the endless chain are connected together at equal intervals to divide the dynamic pressure difference between the inlet and outlet of the pipe so that each pressure-receiving member receives uniform pressure.

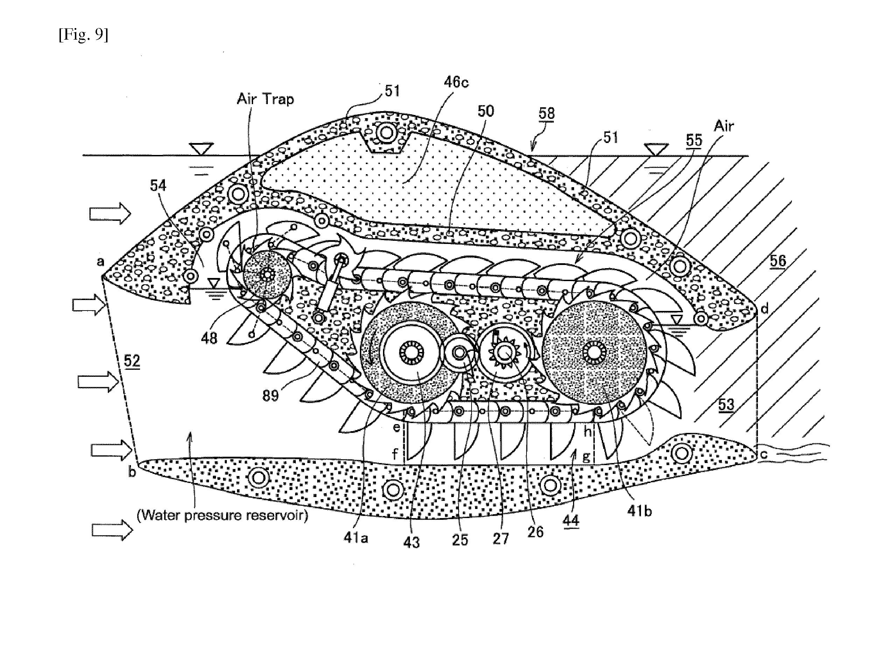

In Fig. 9, providing a pressure trap in front of the pressure pipe not only allows this space to serve as an inlet of steady-state flow, but it also stabilizes and ensures stagnant point pressure, to eliminate overflowing or entry of disturbed flow from the periphery of the cup.

Under the present invention, the forward advance path may be covered with a pressure pipe or pressure water conduit to provide a sealed water conduit whose reverse advance path is sealed by the side faces of the pressure pipe, where flowing water generated by bypassing the sealed water conduit is blocked and the resulting negative pressure generating inside the flow outlet area of the water conduit to which the aforementioned pressure is applied can be used as a pressure difference added to the dynamic pressure at the flow inlet.

A negative pressure area generates at the back of any resistance object placed inside flowing water as the boundary layer separates due to viscous pressure resistance (eddy-making resistance), and negative pressure generates around the flow outlet as a result, but utilization of such negative pressure has not been possible because surrounding water flows in through the reverse advance path that opens to the side face of the pressure water conduit, to keep the pressure inside the pressure water conduit from falling below zero.

Under the present application for patent, a sealed water conduit is provided whose reverse advance path is entirely enclosed, in order to block the flowing of water inside the sealed water conduit and thereby retain the negative pressure generating inside the flow outlet of the pressure water conduit, with this negative pressure utilized as a pressure difference from the dynamic pressure at the flow inlet at the other end.

To prevent the water contained in the sealed water conduit from flowing as a result of the bypassing, an air trap is formed at a high position in the sealed water conduit to split the contained water.

In other words, high pressure leads to high water level at the flow inlet, while low pressure leads to low water level at the flow outlet, and a height difference generates between the two water levels as a result, but because the two water levels are partitioned by the path surface, etc., and the height of this partition cannot be passed, bypassing water flow does not generate and the pressure difference between the two is maintained.

Accordingly, dynamic pressure push-in pressure generates at the inlet of the pressure pipe, while flowing water in the outside field causes negative pressure to generate at the outlet of the pipe, and because the pressure difference between the two pipe ends increases as a result, the energy density inside the pipe rises beyond that of flowing water in the outside field.

Under the present invention, an endless chain waterwheel having a pressure pipe or pressure water conduit as well as a streamlined shape on its top, bottom and side faces can be submerged and secured in flowing water and high-speed side flow is jetted toward the rear of the flow outlet of the pressure pipe or pressure water conduit, in order to produce suction effect and thereby make the pressure inside the flow outlet area negative.

When a streamlined resistance object is submerged in water, the flowing water generates high-speed flows on the outside of two side faces of the object, so a streamlined shape is given to prevent these flows from separating, while the surface is made smooth to maintain the high-speed flows, and these flows are headed down to the flow outlet by means of the Coanda effect and then jetted toward the rear of the flow outlet, with the outflow water suctioned out continuously by means of the viscosity of flowing water from both sides, to generate negative water pressure in the flow outlet.

The wing shape formed by the streamlined top plate above and the streamlined floor plate below is such that a larger maximum wing thickness increases the volume of flowing water corresponding to the projected area of flowing water and as this greater volume of water flows out from both side faces, high-speed side flows are produced; since the maximum flow velocity is constant, however, the high-speed flow layer becomes thicker and this leads to greater resistance although the flow becomes more stable.

On the other hand, a longer wing chord leads to lower flow velocity.

This means that the greater the wing-thickness ratio (= maximum wing thickness/wing chord), the more advantageous; however, it also makes flow separation occur easily, and because the Reynolds number is also involved, an appropriate ratio should be determined according to the condition of the site.

Also, the shape of the front half from the front edge to the maximum wing thickness only needs to have a smooth curve because flow separation does not occur due to the pressure of flowing water.

Rollers are installed on the cylindrical interior surface of the water-blocking plate and the back of the pressure-receiving member is pressed against the rollers by means of centrifugal force, and the reaction causes the bottom face of the sheet-shaped belt to be pressed against the circular path surface of the lead wheel to block water from the top/bottom contact area, so that the coasters on both side faces slide in a manner blocking water, while water is blocked on the inner side by the pressure-receiving member standing up on the top face of the sheet-shaped belt by the two-level lead wheels, and although bypassing water flow enters between the standing-up position of the pressure-receiving member and the guide rollers, bypassing water flow in the opposite direction can be suppressed by providing an inflow door of adjustable open angle at the flow inlet of the pressure pipe and then using the inflow door to jet the water flowing in at high speed.

In other words, water is blocked by pressure of centrifugal force between the circular path surface of the lead wheel and the bottom face of the sheet-shaped belt, and also between the elastic roller provided along the cylindrical inner diameter of the water-blocking plate and the back of the pressure-receiving plate of the bottomless cup, where the two sides project toward each other to create a narrow space between them, while the sliding coasters block water along the two side wall surfaces of the pressure pipe, and because the structure is fully submerged in water, a sheet-shaped belt for water lubrication is used.

Accordingly, water is completely blocked between the continuous belt and the pressure pipe or pressure water conduit enclosing the belt; whereas, on the inner side, water is blocked by spooling in the pressure-receiving member using the two-level lead wheels to pressure the bottom of the pressure-receiving member and thereby cause the member to stand on the top face of the sheet-shaped belt, which means that bypassing water flow enters through the turning section between this erected position and the guide roller.

For this reason, an inflow door of adjustable open angle is provided at the water inlet of the pressure pipe and the inflow door is used to raise the inflow velocity to generate high-speed inflow water jet so that the turning section is blocked with the film of this flowing water, and consequently any bypassing water flow entering from the very opposite direction is prevented.

Accordingly, since any reverse water flow is blocked by the jetting force or viscosity of high-speed water jet, this can be coordinated with the means for blocking water on the exterior surface and inside of the continuous belt to prevent bypassing.

As for the flow velocity generated by pressure conversion inside the pipe, a corresponding volume of water flows in through the inflow door provided at the flow inlet and therefore the open angle of the inflow door is adjusted to jet out the flow at high speed, but the volume of water is far smaller than with the lift type.

It should be noted that, while the drag-type waterwheel that receives flowing water from the outside field via the open water path is unable to fully absorb the flowing water energy due to overflowing or eddying of water flowing into the cup, the pressure type creates a pressure trap and receives less inflow of water, meaning that disturbed flow does not generate as much even when the intervals between the pressure-receiving members are decreased.

Therefore, their intervals are decreased to shorten the traveling path, while the pressure-receiving members are overlapped with one another in the reverse advance path, to decrease the distance of the turning path section to be blocked.

Compared to preventing the bypassing using an air trap, the streamlined shape with a low top plate makes it more difficult for flow separation to occur from the surface.

**Effects of the Invention**

The drag-type water power conversion device for converting flowing water energy to rotational force pertaining to the present invention has a simple structure and can efficiently convert the energy of flowing water to rotational force.
Handling changes in ocean current is also easy, and high-capacity power generation is possible with a small device.
The initial investment is small and the running cost is also low.
Furthermore, the device demonstrates excellent durability.

**Brief Description of the Drawings**

[Fig. 1] Drawing explaining the operating principles of a bottomless-cup type underwater waterwheel.
[Fig. 2] General structure drawing of a bottomless-cup type continuous belt.
[Fig. 3] Overview of a drag-type continuous belt installed at the bottom of water.
[Fig. 4] Partial section drawing of a drag-type continuous belt secured and seated in a floating state.
[Fig. 5] Structure drawing of a long device whose continuous belt is coupled in a floating state.
[Fig. 6] Section drawing of a continuous belt device utilizing approach and return flows. [Fig. 7] Section drawing of a continuous belt device utilizing wave current flow.
[Fig. 8] Section drawing of a partially submerged platform and pressure water conduit.
[Fig. 9] Pressure-type power conversion device utilizing the viscous pressure resistance at the back of the device.
[Fig. 10] Pressure-type power conversion device having a streamlined shape and utilizing high-speed outside flows.
[Fig. 11] Cutout drawing showing how bypassing is prevented by the curved lead wheel surface and water flowing in at high speed.
[Fig. 12] Example of continuous belt structure of pressure pipe method.

**Description of the Symbols**

5 = Pivot
6c = Center of gravity of bottomless cup
7 = Bottom plate
8 = Water-blocking plate
17a = Forward advance path
17b = Reverse advance path
20 = Center body
21 = Escape wheel
25 = (Speed) conversion gear
26 = Common shaft
27 = One-way clutch
43 = Driving gear
44 = Pressure water conduit (forward advance path)
48 = Sheet-shaped lead wheel
24 = Tensioner
64 = High-speed side flow
70 = Partially submerged platform
89 = Coaster
49 = Sheet-shaped belt
59 = Pressure-receiving member
96 = Boundary layer
97 = Floating-type two-level flap
98 = Louver door (slit) arm

**Best Mode for Carrying Out the Invention**

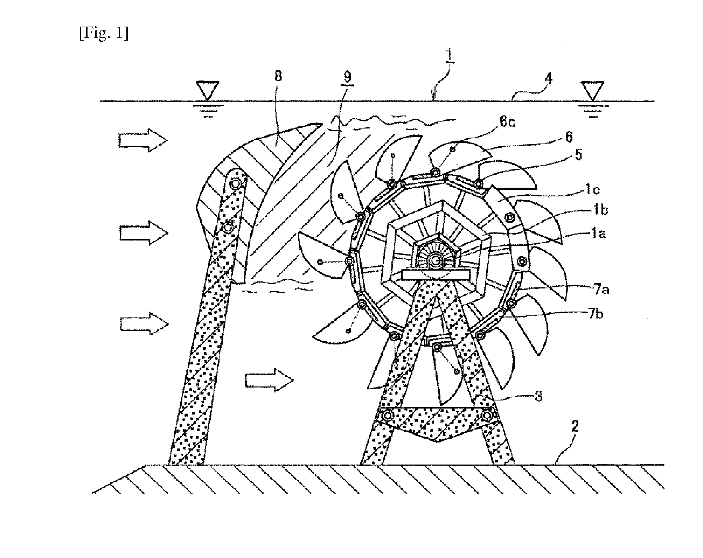

A water power conversion device of uniaxial waterwheel type pertaining to the present invention is shown in Fig. 1.

Since an underwater waterwheel 1 is of drag type, a rotational shaft 1a is placed at right angles to flowing water in order to simultaneously create a forward advance path for turning in the same direction as flowing water and a reverse advance path for turning in the opposite direction, where the waterwheel turns as a result of the drag difference between the two.

In the example in Fig. 1, the underwater waterwheel 1 is installed below a water surface 4.

A support column 3 is erected on a bottom face 2 and the underwater waterwheel is installed thereon.

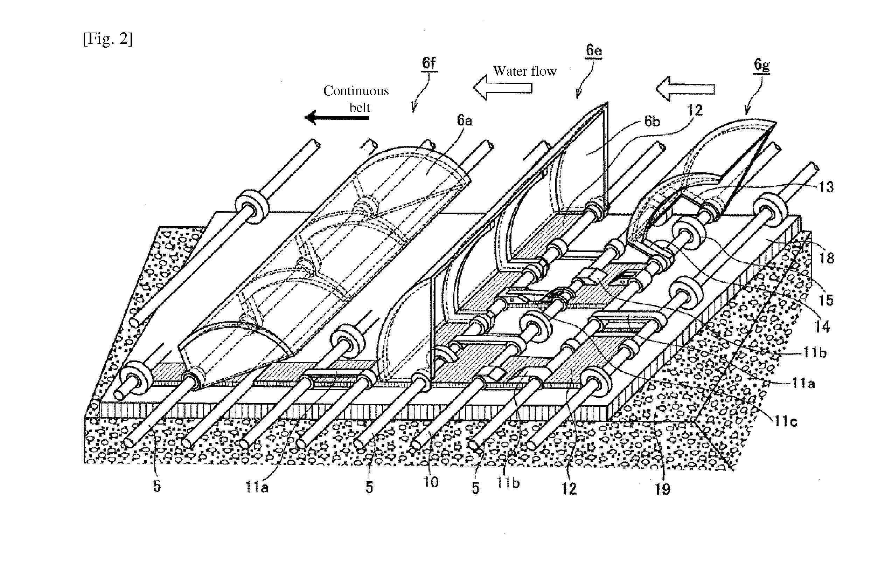

The water-receiving cup provided on an outer wheel 1c of the underwater waterwheel 1 is divided on one hand into a bottomless cup 6 integrally formed by a pressure-receiving plate 6a that receives flowing water and by a side plate 6b on both sides, and into a bottom plate 7 (7a, 7b) on the other, as shown in Fig. 2, with the bottomless cup 6 and bottom plate 7 placed in a freely rotatable manner on a pivot 5 penetrating the two, where the included angle formed by the bottom face of the bottomless cup 6 and the bottom plate 7 can be opened or closed as desired and also sealed to stop water, while the bottom plate 7 is secured on the outer wheel 1c in such a way that, in the forward advance path, the bottomless cup 6 receives flowing water and seals the included angle to stand 6e on the outer wheel 1c while pressing the bottom plate 7 and thus stopping water to demonstrate high flowing water resistance equivalent to what can be achieved with a bottomed cup, whereas, in the reverse advance path, it receives flowing water and turns around the pivot 5 to lie down 6f on the outer wheel 1c so that the included angle opens wide and the flowing water passes on the inner side and outer side of the bottomless cup 6 to make the flowing water resistance virtually zero, which results in a very large resistance difference

It should be noted that the drag of the pressure-receiving plate 6a placed in flowing water at right angles to the flowing water is calculated by the equation "Drag = Coefficient of drag x Flow velocity x Projected area," meaning that the drag-type waterwheel works as flowing water hits the waterwheel directly.

Consider the fact that a water-blocking plate 8 is provided outside the underwater waterwheel 1 to form a stagnant water area 9 where flowing water is blocked and therefore while turning for approx. three right angles from the reverse advance path to the forward advance path the bottomless cup 6 receives centrifugal force and its center of gravity 6c comes on a line connecting the waterwheel rotational shaft 1a and the pivot 5, thereby causing the pressure-receiving plate 6a to extend outward and become half-open 6g and continue turning in this condition; because of this, and also according to Figs. 1 and 2, by keeping the bottomless cup 6 at the height of the water-blocking plate 8 and thereby blocking water until it comes the position where the next inflow water jet hits the inner surface of the pressure-receiving plate 6a, the bottomless cup 6 will subsequently stand 6e due to the flowing water force and gravity fall, to end the automatic turning.

It should be noted that the turning from the standing state 6e to the lying down state 6f, which spans approx. one right angle only, is natural in accordance with flowing water.

This allows for automatic turning of the underwater waterwheel 1 whose rotational shaft 1a is placed at right angles to the direction of flow, wherein such underwater waterwheel is characterized in that it turns automatically and continuously in a fully submerged state, while the resistance difference between the standing state 6e and lying down state 6f is maximized, and the bottomless cup 6 and bottom plate 7 are separated and the included angle between the two is opened or closed by means of uniaxial rotation.

A continuous-belt type water power conversion device comprised of an endless chain is shown in Fig. 2.

While the bottom plate 7 of the underwater waterwheel 1 is fixed to the outer wheel 1c, in Fig. 2 the bottom plate is fixed to the continuous belt of endless chain so that the bottomless cup 6 circulates on the path surface while maintaining its function with respect to the bottom plate 7.

To be specific, new slave shafts 10 are added at equal intervals in parallel with the pivots 5, together with shaft links 11 (11a to 11c) that link the shafts in a freely rotatable manner, to form a continuous belt covering the entire circumference of a path surface 18 on the top face of a framework 19.

A band-shaped bottom plate 12 is internally secured to the shaft links 11 connecting each pivot 5 and the slave shaft 10 forward of it, while the bottomless cup 6 is installed on the pivot 5, so the band-shaped bottom plate 12 and the bottom face of the bottomless cup 6 form an included angle around the pivot 5 and circulates accordingly while performing the function described in connection with the underwater waterwheel mentioned above.

The band-shaped bottom plate 12 has the performance of the hard bottom plate 7b and that of the elastic bottom plate 7a as the bottom side of the former is connected to the top side of the latter, to achieve greater adhesion with the bottom face and, to allow for easy replacement, the shaft link is provided as either a cutout link 11b or meshing link 11c.

Similarly, a band-shaped hard plate 12b for blocking water is internally secured to the shaft links 11 connecting each pivot 5 and the slave shaft 10 rearward of it, to allow for adoption of the water lubrication method, where the shaft link is provided as an all-around link 11 a.

It should be noted that elastic strips 13 may be attached to the base of the bottomless cup to turn all band-shaped bottom plates 12 into band-shaped hard plates of the same type.

In addition, the angle and curvature of the pressure-receiving plate 6a are changed, while the center position of flowing water pressure is moved up and down, so that the bottomless cup circulates while applying appropriate pressure to the bottom plate through its bottom face.

At the same time, small wheels 15 are uniformly distributed and installed on the pivots 5 and slave shafts 10 to make sure uniform support forces are applied, in order to prevent the band-shaped bottom plates 12 from warping and leaking water.

It should be noted that, if the entire path surface 18 is under water, the water lubrication method utilizing spring plates and lubrication plates (not illustrated) can be used to minimize the friction resistance.

As for the shape of the bottomless cup 6, the width, height and bottom area of the pressure-receiving plate 6 are determined according to the target energy value to be achieved, and although this cup can be easily fabricated regardless of its shape, choosing a metal material provides greater advantage than using a complex, expensive wing wheels, because such material can be processed easily using a bender.

Moreover, since the fabrication cost of the continuous belt can be reduced when made as light and wide as possible, the pressure-receiving plate 6a has a vertical rib 14 to reduce weight, while the continuous belt has a lightweight construction so that it circulates nimbly.

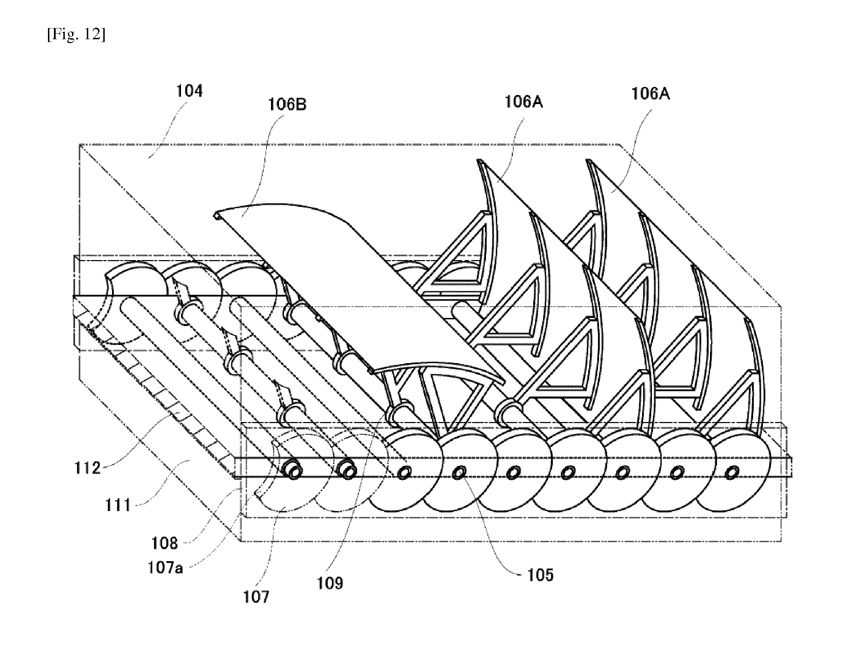

In the example of Fig. 12, the structure of a continuous-belt type water power conversion device having a pressure-receiving member 106 provided inside a pressure pipe 104 is shown.

The pressure-receiving member 106 moves in a manner blocking the forward advance path of water flow comprised of the pressure pipe 104, and after passing through the pressure pipe 104, the pressure-receiving member rotates around a pivot 109 as indicated by 106B in Fig. 12 to lie down and circulate.

A pressure-receiving member 106A is of enough size and shape to block the interior section of the pressure pipe 104 in the standing state, and functions as a blocking plate.

The continuous belt is a sheet-shaped circulating belt 112 to seal between the top and bottom spaces on the lower side of the pressure pipe, and the sheet-shaped belt 112 is lubricated by water against a path surface 111 on which it circulates.

In addition, coasters 107, each made of a disc shape partially cut in an arc shape 107a, are articulated on projected parts 105 of the shafts that are positioned in a manner penetrating the sheet-shaped belt 112 in the width direction, to allow for circulation.

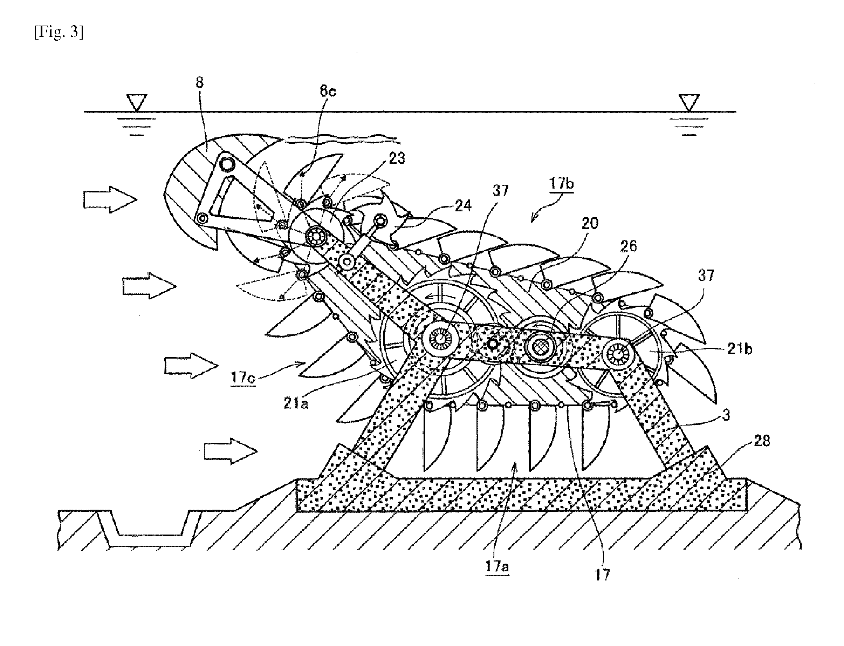

It should be noted that the circulating part may be constructed with escape wheel shafts just like in Fig. 3, or with general roller shafts.

The coaster 107 slides along a water-blocking path 108 to block water so that the interior of the pressure pipe is sealed.

In addition, the reverse advance path of the pressure-receiving member 106, which serves as the blocking plate, can be a sealed water conduit.

In the example shown in Fig. 3, the endless chain waterwheel is installed on the support columns 3 erected from a securing base 28 at the bottom of water.

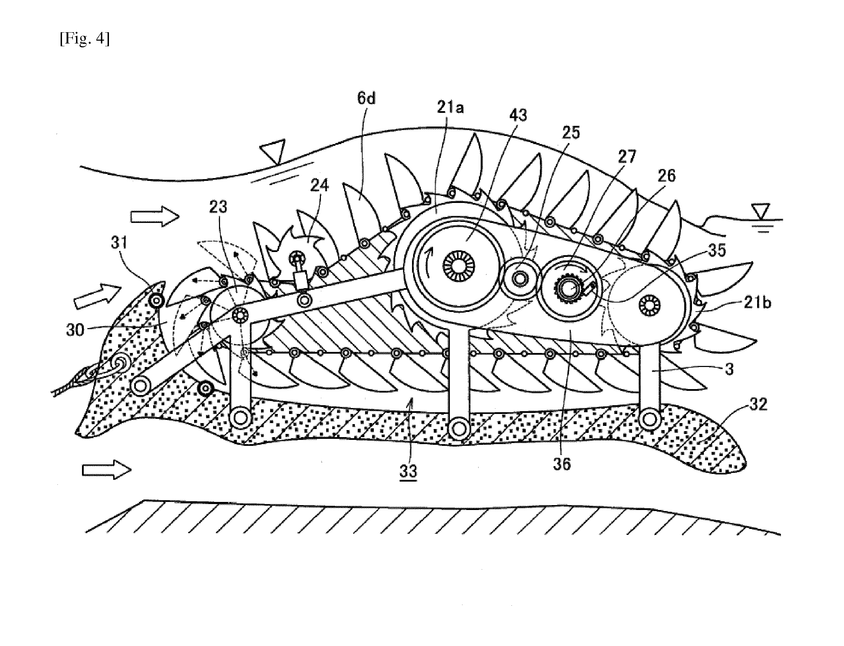

Flowing water pressure is received by the pressure-receiving plate 6a of the standing bottomless cup to generate water power according to the area of the pressure-receiving plate 6a, and a continuous belt 17 is set in translational motion and circulated along the path surface 18 on a center body 20, and consequently the projecting parts of the pivot 5 and slave shaft 10 as shown in Fig. 2 of the continuous belt 17 mesh with the sprockets of escape wheels 21a, 21b installed on a penetrating shaft 37 of the center body 20 to turn the escape wheels 21 so that shaft driving force is generated on a driving gear 43 installed coaxially on the escape wheels 21, and as this torque is applied to a driven common shaft 26 to change the amount of angular movement of the common shaft 26, the flowing water energy is converted to rotational force (refer to Fig. 4).

Fig. 4 is an example of a floating drag-type continuous belt, where the space inside the center body and the ability to operate in a seated position at low water level make this configuration effective in intertidal zone or low-tide rivers subject to a large tidal difference.

The continuous belt divides the path into the forward advance path and reverse advance path 33 and their lengths are adjustable, and the ratio of the two lengths can be changed by forming an inclined surface.

Also, the structure for meshing the sprockets of the escape wheels 21 (21a, 21b) with the projected parts of the pivot 5 and slave shaft 10 is simple and has ample margins, so floating contaminants, seaweeds, etc., do not get tangled easily and tangled objects separate quickly, and as with the operating principles of the underwater waterwheel, this type also starts automatically and completes turning only by means of flowing water, so breakdown does not occur easily even when turning at high speed.

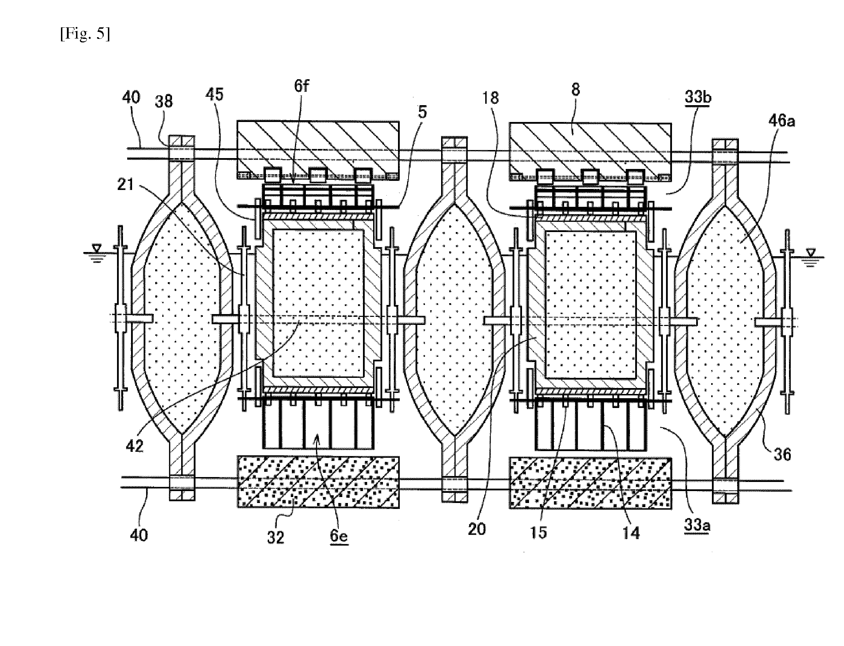

In Fig. 5, the center body 20 on which the continuous belt 17 circulates is a box body comprising the path surface 18 running all around and two side faces, where two escape wheel shafts 42 are passed through the interior of the center body 20 and supported by the bearings provided on the vertical bulkheads located outward of both ends of the shafts, with the escape wheels 21 installed on both side faces of the center body 20, and because the escape wheels 21 are installed at the same angle at both the left end and right end of the same penetrating shaft 42, meshing of the escape wheels with the projecting shafts at both ends of the continuous belt 17 on the path surface 18 causes equivalent forces to be transmitted on the left and right to prevent warping of the continuous belt 17 and minimize accidents.

In Fig. 5, the weight of the center body 20 and continuous belt 17 must be supported before the continuous belt 17 can circulate up and down all around 18, and also to prevent the penetrating shaft 42 from receiving excessive load, the space between the side face of the box body and the penetrating shaft or common shaft is sealed with bearings or fixed pipes so that underwater buoyancy is exerted by the interior volume of the box body constituting the center body 20 and that the total underwater weight of the center body 20 and continuous belt 17 becomes roughly zero.

In Fig. 3, a third shaft is provided in addition to the driving wheel 21a and slave wheel 21b of the escape wheel 21, at a position to the rear of the water-blocking plate 8 and in a manner penetrating the center body 20, and a small-diameter lead wheel 23 is installed, and when the continuous belt 17 is circulated, the curvature becomes small and the angular velocity of rotation becomes large at the applicable position, and consequently large centrifugal force is applied to the center of gravity 6c of the bottomless cup, and the half-open 6g pressure-receiving plate 6a of the cup opens further outward to increase the turning force amplification effect.

In addition, providing the small lead wheel 23 for use in the turning of the cup makes it possible to also reduce the size of the water-blocking plate 8, which widens the space between the small lead wheel 23 on the third shaft and the driving wheel 21a of the escape wheel to form an inclined advance path 17c.

This means that, even when the flow velocity is weak and the centrifugal force due to the small lead wheel is low, the bottomless cup turns in a manner dropping downward in the stagnant water area created by the water-blocking plate while being supported at its center of gravity on the pivot, and then enters a next forward advance path 17a after fully completing its turning, so the problems associated with the biaxial parallel layout are eliminated.

In addition, because the area of contact between the inflow water and cup increases or additional flow generates along the inclined surface due to the Coanda effect, the water-receiving effect with respect to the cup under the open method improves significantly compared to the biaxial parallel method.

In Fig. 4, providing the small lead wheel allows for size reduction of the water-blocking plate 8 and formation of a casing 30 integrated with the main body.

So, this casing is made cylindrical and the small lead wheel 23 and continuous belt are turned inside the casing, where the casing is formed with an inner diameter smaller than the outer diameter of the free centrifugal turning of the bottomless cup and the exterior surface of the pressure-receiving plate 6a is pressed by the interior wall surface 30 of the casing to retard backward the position of the center of gravity 6c of the cup, and when the cup is turned in this condition and passes a roller 31 before the casing outlet, the pressure is released all at once and the cup receives double angular velocities including the angular velocity of rotation of the lead wheel 23 and the angular velocity around the pivot 5, and consequently more centrifugal turning force is applied to the center of gravity 6c of the cup and the pressure-receiving plate 6a opens wide, and because the inflow water jet hits the inner surface of the pressure-receiving plate 6a to cause the cup to turn, strong turning force is generated even when the circulating velocity is low.

In addition, no installation work is necessary because the external water-blocking plate is integrally connected to the main body.

In Fig. 4, a tensioner 24 is provided for the lead wheel 23 in its proximity to make the two as a set and the continuous belt 17 circulating around the lead wheel 23 is strongly pulled with the tensioner 24 to be forcibly spooled around the lead wheel 23 at large angles, so that inflow water jet hits the inner surface of the pressure-receiving plate 6a of the bottomless cup, and the cup is turned by the flowing water pressure thereafter.

Also, as shown in Fig. 3, making the inclined advance path 17c inclined in the opposite direction adds the gravitational falling force to complete the turning, meaning that the bottomless cup 6 is turned reliably without relying on centrifugal force or flow velocity.

In Fig. 5, a number of self-floating continuous belt devices are arranged in parallel in a floating state and secured with continuing pipes 40 to construct a long device, with each device generating water power and transmitting it to the common shaft 26 to generate large torque on the common shaft 26.

To be specific, a large volume of inflow water is used to ensure the necessary amount of energy to obtain power generating capacity, because natural energy generally has sparse energy density, where the theoretical power generation volume P is $P = \rho QV^2/2$ (W), proportional to the inflow water volume Q (m$^3$) and flow velocity V (m/t).

Under the present application for patent, a roof-shaped float body having sufficient buoyancy due to its top plate and upper roof plate can be formed and this roof-shaped floating body is placed on top, a floor plate of normal specific gravity at the bottom, and a center body with zero underwater weight at the center, with all these sandwiched between vertical bulkheads on both sides and secured with U-bolts and high-tensile fiber tie-bands.

A one-way clutch 27 is provided so that, when the flow velocity decreases but while the rotational speed after acceleration at the gear ratio of a conversion gear 25 shown in Fig. 4 is still lower than the rotational speed of the common shaft 26, the common shaft 26 is slipped by the clutch to cut off the transmission so as not to supply the rotational force of the common shaft in the opposite direction.

Particularly with the common shaft 26 of a long device subject to fluctuating wave phase difference and flow direction, any component that weakens the rotation of the common shaft 26 is removed by the one-way clutch 27.

To be specific, when transmitting the torque of the driving gear (A) 43 to the common shaft (C) 26 by accelerating its speed with the conversion gear (B) 25, the gear ratio G calculated by "G = Number of output teeth / Number of input teeth," or nB/nA, is kept lower than 1.0 to raise the number of revolutions and thereby keep the torque transmission ratio low.

Here, the gears on both sides have the same peripheral velocity v and transmitted torque T at the location where the gears are meshed.

A power generator shaft (not illustrated) is connected to the common shaft 26 and already turning in the same direction, so when the peripheral velocity vB of the conversion gear 25 after speed change is the same as the peripheral velocity vC of the common shaft 26, as expressed by (vB - vC) = 0, then the supplied torque becomes zero; but when the peripheral velocity vB of the conversion gear 25 is greater than the peripheral velocity vC of the common shaft 26, as expressed by (vB - vC) > 0, then this differential speed becomes the acceleration $\alpha$, as expressed by $\alpha = d(vB- vC)/dt = |F/r|\sin\theta$, where r represents the turning radius.

Accordingly, the torque T is supplied to the common shaft as the amount of angular motion L and work that gives a displacement corresponding to the angle of rotation $\theta$ is performed, and the common shaft has energy as a result.

Since the delta torque $\Delta T$ until reaching the same peripheral velocity is not transmitted to the common shaft, no force F is applied to the driving gear 43 and the rotational resistance of the escape wheel 21 remains small and light, and therefore the peripheral velocity vD of the continuous belt (D) 17 does not drop.

In addition, when the differential peripheral velocity is negative, as expressed by (vB - vC) < 0, the one-way clutch 27 slips and the supply of delta torque $\Delta T$ is cut off, and therefore the peripheral velocity vD of the continuous belt 17 does not drop.

In other words, the gear ratio is made low where the flow velocity is low and the torque transmission ratio becomes low after torque is applied in an early stage, while the gear ratio is made large where the flow velocity is high and the torque transmission ratio becomes large once torque is applied in a late stage, and this way, the peripheral velocity of the continuous belt is automatically adjusted.

Accordingly, this gear ratio G is set to an appropriate value according to the flow velocity of the field and the characteristics of the device.

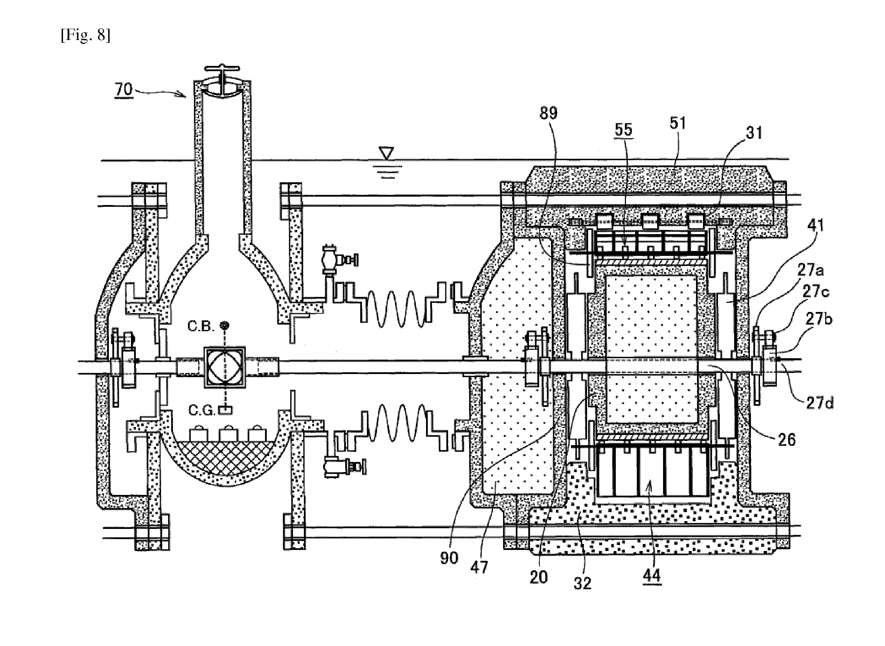

It should be noted that "one-way clutch" is a general term and an example is shown in Fig. 8, where a driven gear 27b is secured to the common shaft 26 via a key groove 27d, while an input gear 27a remains free from the common shaft 26 and slippable, and the torque of the input gear is supplied in one direction to the driven gear through a keystone 27c.

A concaved, curved bulkhead 36 in Fig. 5 is an impermeable material and external floating body in which foamed resin moldings are sealed, where high flowing water resistance makes it a hindrance.

The center body 20 in Fig. 5 is an impermeable material, but the center body 20 in Fig. 8 is made of watertight, lightweight concrete and has free shape.

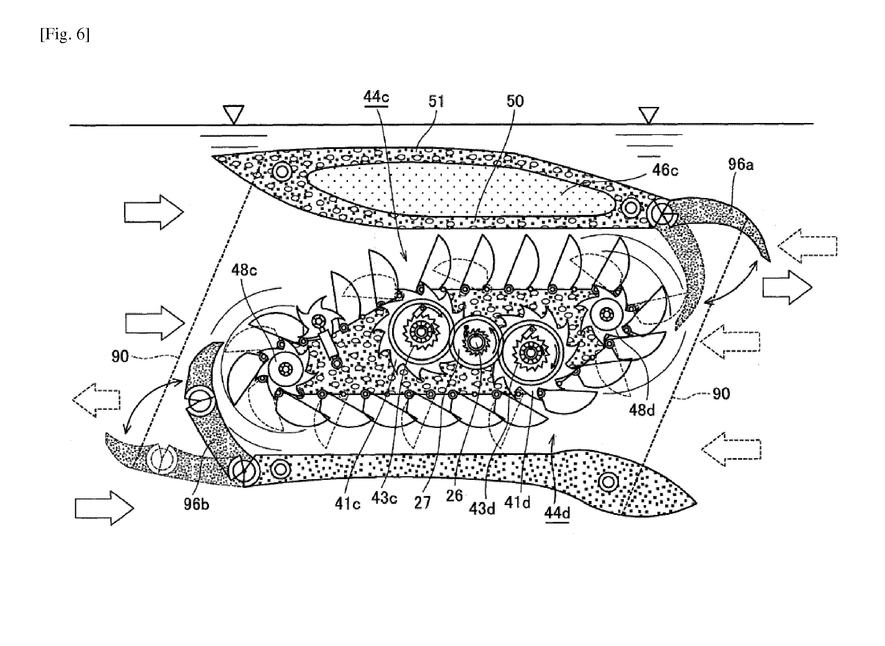

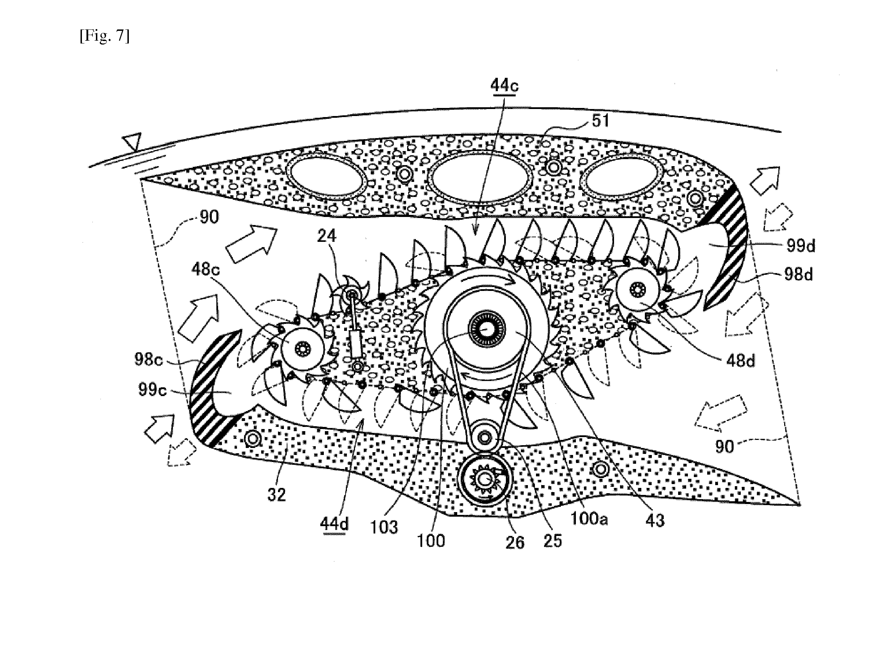

The external floating body 36 in Fig. 5 is an impermeable material, but a top plate 51 in Fig. 6 or 7 is made of watertight, lightweight concrete, where, in Fig. 6, low-foamed resin 46c is sealed in watertight, lightweight concrete of low specific gravity and because the specific gravity difference between the two is small, the separation and floating force that applies at the time of anchoring and installation is low to make the sealing work easy.

Alternately in Fig. 7, large sealed hollow bodies 106 are filled inside and the specific surface areas of large and fine grains decrease in inverse proportion to their diameters, but since the viscosity is high, separation and floating is virtually a non-issue and so long as the materials of the two grains are homogeneous, a product of uniform pressure-resistant strength can be obtained by making sure they have the same apparent specific gravity.

A floor plate 32 in Fig. 7 is made of watertight, heavy concrete of increased specific gravity, to lower the center of gravity and increase the weight restoration force.

A partially submerged platform 70 in Fig. 8 is made of watertight, lightweight ferroconcrete.

Creating a sealed void inside a device carefully constructed with watertight, lightweight concrete materials allows the buoyancy and device to function as one and consequently the underwater buoyancy of the device will remain unchanged virtually forever, and because its center of gravity will also remain unchanged, the mutual positions of the center of floatation and center of gravity of the device, and its strength, will remain unchanged, as well.

This makes feasible a self-floating device that floats using its own buoyancy and controls its posture with self-restoration force. In Fig. 6, the center body 20 has zero underwater weight as mentioned above, but if made of watertight, lightweight concrete, its buoyancy will remain unchanged forever.

Similarly, creating a sealed void inside the roof-shaped floating body using an upper roof plate 50 and the top plate 51 allows the floating body to have sufficient buoyancy.

When marine structures start floating or drifting in water or at water surface, the risk of their colliding with navigating vessels becomes extremely high, so it is of utmost importance to make sure they float to/remain at water surface to be easily detected and collected.

Accordingly, in Fig. 5, foamed moldings 46a are filled in the voids in the gear chamber, etc., while reactive resin is injected into an interior 46b of the center body 20 and foamed by chemical reaction to fill the space.

By using this foaming/filling method, and also by filling the space between the upper roof plate 50 and top plate 51 in Fig. 6 with moldings 46c at the time of anchoring and installation, safety will improve.

As mentioned above, the device under the present application for patent is fabricated in such a way that the roof-shaped floating body is placed on top, the floor plate 32 at the bottom, and the center body 20 at the center, with all these sandwiched between the vertical bulkheads 90 on both sides and secured with the U-bolts 91 and high-tensile fiber tie-bands 92, etc., to construct a unit self-floating device.

Then, normally a number of these unit devices are arranged in parallel with horizontal through holes 38 opened in the top plate, 51, upper roof plate 50 and floor plate 32 of each of these unit devices, after which the continuing pipes 40 are inserted in the holes to form a long device which is then secured.

According to this assembly method, the continuing pipes 40 run through the interior of each concrete plate and therefore no projections are formed on the exterior surface, which results in low fluid resistance and this effect becomes particularly clear with a suction-vacuum type device that utilizes side flows at high speed.

In Fig. 9, there are no obstacles in water conduits 44, 33 except for the sheet-shaped escape wheels 41 (41a, 41b), so after dragging out the escape wheels in water, a diver can enter the water conduits which are now virtually tunnels, and clean every corner using high-speed water jet and various cleaning methods.

In Fig. 6, a pair of escape wheels 41c, 41d, a pair of lead wheels 48c, 48d, and a pair of movable water-blocking plates 96a, 96b (hereinafter referred to as "flaps"), are provided at rotationally symmetric positions apart by 180 degrees (hereinafter referred to as "two-fold axis") on the left and right of the common shaft 26, and the continuous belt is circulated on the hard path surface 18 of the center body 20, where the flaps are actuated by specific gravity difference with the upper flap sinking 96a and lower flap floating 96b, so that they are opened and closed according to the strength and weakness of flowing water.

In addition, by arranging the parts at rotationally symmetric positions of two-fold axis relative to approach and return flows, the circulating direction of the continuous belt becomes the same as the rotational direction of the common shaft 26.

Since tidal current comprises long-cycle approach and return flows, a flow inlet 52 and the vertical bulkhead 90 are present both at the front and rear, while a pressure water conduit 44c is also created at the top and also at the bottom to provide two paths, to handle the respective flow directions.

In other words, the problem of keeping the circulating direction of the continuous belt 17 always the same as the rotational direction of the common shaft 26 relative to the approach and return flows and also keeping the momentum of belt circulation always the same as that of shaft rotation, is resolved by creating a rotationally symmetric layout of 180 degrees (two-fold axis) around the common shaft 26, with a pair of driving gears 43c of sheet-shaped escape wheels 41c, a pair of lead wheels 48c, and a pair of movable water-blocking plates (hereinafter referred to as "flaps"), arranged in symmetric positions, respectively.

In addition, since the flaps are provided in upper and lower positions and actuated in the opposite directions, specific gravity difference from water is provided and a sinking flap 96a is adopted for the upper and a floating flap 96b for the lower, with both flaps opened and closed according to the strength and weakness of flowing water inside the pressure water conduit.

In other words, the upper and lower pressure water conduits both assume a state of forward advance path 17a and that of reverse advance path 17b, and the water-blocking plate 8 is needed to turn the bottomless cup as it transitions from the reverse advance path to the forward advance path, but since the flow velocity in the pressure water conduit 44 is virtually zero at this point, the sinking flap 96a and floating flap 96b are both closed by their respective specific gravity differences.

When the cup is advancing forward, on the other hand, strong flow momentums in the pressure water conduits 44c, 44d cause the flaps to open to allow for complete self-starting.

In Fig. 7, the flow inlet and sheet-shaped lead wheel 48 (48c, 48d) are provided at the front and also at the rear with an escape wheel 100 at the center, while the water-blocking plates are secured and positioned at rotationally symmetric positions of two-fold axis, and the circulating direction of the continuous belt is adjusted the same as the rotational direction of the common shaft 26.

Also because tidal current has short wavelengths, torque transmitted from the driving wheel of the large escape wheel 100 is stored in the gear chamber, and the common shaft is positioned below the lower continuous belt path, to follow the wave motion better.

Accordingly, by eliminating the slave wheel of the escape wheel to shorten the device and also shortening the continuous belt stroke to capture wave flows better, while placing the thick, heavy common shaft at the bottom of the device, a large righting lever will function in conjunction with the buoyancy of the top plate so as to exert weight restoration force.

In other words, while oscillation of the device must be stopped before the flow energy of wave can be utilized and increasing the vessel length has so far been the only way to do this, it is the other way around and the device is made shorter under the present application for patent, with the device secured in water in order to exert its own weight restoration force.

Also because the flow direction and intensity of tidal current change frequently, a water-blocking plate 98 (98c, 98d) has the shape of a thick, curved wooden arm (hereinafter referred to as "arm 98") and adopts the louver door structure (hereinafter referred to as "slit"), and is secured in such a way that the arm shape and slit groove inclination angle are adjusted to allow flowing water in the outside field to be led to the flow inlet easily.

In other words, the flow of wave is led to the flow inlet without disturbing the rotational motion of wave, but the flow is reflected and kept out of the water conduit 44, while the forward advance flow from the water conduit is passed and discharged to the outside, and because a very large concave part 99 (99c, 99d) is provided so that no discharge resistance will apply, and also because normal wave is short-cycled and carries only a small amount of water, no problem is anticipated.

Also, the coefficient of effect of the bottomless cup becomes very low when it lies down 6f in the reverse advance path, so even when the surrounding flow velocity is zero in the water conduit 44, the cup circulates with virtually no resistance and the surrounding water remains perched.

This means that, by making the continuous belt as light and short as possible, the cup will continue to circulate in a lying-down state 6f even when inflow water is cut off, and any energy loss will become very low.

Accordingly, even when the large-diameter sheet-shaped escape wheel 100 has no one-way clutch and the cup continues to circulate, it will automatically stand 6e due to the next inflow water and accelerate, and continue to turn.

Since the cup turns in one direction, providing flywheels (not illustrated) will allow it to stand 6e regardless of which side the water flows from, thereby enabling effective acceleration and smooth pulsating rotation, which is advantageous for irregular waves.

In Fig. 8, a number of devices are linked in parallel to form a long device of specific length, where the partially submerged platform 70 is provided at both ends and continuing pipes 40 running through the long device are connected to support columns 78 provided on the partially submerged platform 70 and secured with fixing parts 84, and mooring parts provided in the lower exterior of the partially submerged platform 70 are used together with mooring ropes and anchors to moor and secure the partially submerged platform 70 in a condition floating in water.

This means that, by using the support columns 78 provided on the exterior of the partially submerged platform to end the continuing pipes 40 and provide intermediate support, the fluid resistance, wind force and all other external forces that apply to the long device are supported by the partially submerged platforms at both ends, and since the respective unit devices constituting the long device do not receive any external force, all devices can be standard products, which is convenient for mass production.

Also, by handling the long device as a unit, offshore operations such as towing on water, connecting and installing in water, etc., can be performed safely, quickly and efficiently, thus reducing the cost of engineering and construction works.

In Fig. 8, the aforementioned partially submerged platform has a partially submerged shell structure with heavy ballasts 74 installed inside with portable ballasts 75 being loaded or unloaded, and if these ballasts are assumed as a heavy battery, transformer or power generator, this platform is equivalent to the partially submerged work barge (platform) 70 that can carry heavy objects at the bottom.

In Fig. 8, a pressure-resistant submersible shell 71 has a long shape to reduce the flowing water resistance and provides a work space 88 in a partially submerged state and also has self-buoyancy; a thin, long column 72 is for use as an access path for operators and goods and also to provide good wave penetrability to withstand winds and waves, with the part projecting above water having a nighttime warning lamp and radar reflector; a watertight hatch 73 is fully sealed for submersion; and heavy ballasts 74 are provided to exert weight restoration force to allow the platform to stand vertically on its own.

In addition, while any long device utilizing high-speed side flows is fully submerged in water and thus requires accurate depth adjustment, the column of this device has small cross-section area to reduce the water displacement per meter and also reduce the portable ballasts 75 loaded or unloaded into/out of the submersible shell, and since large water line movement is possible with low weight, the submersion depth of the long device can be adjusted effectively.

Here, the partially submerged platform comprises the pressure-resistant submersible shell 71 in water and the access way (column 72) projecting above water, and has buoyancy to float on sea surface on its own as well as weight restoration force to remain in an upright position at water surface, where, in a partially submerged state, the platform allows for circulation of air, supply of goods, and movement of personnel, in the submersible shell under calm winds and waves in water and also in the access way projecting above water, which represents the same environment as on land and, unlike with fully submerged structures, an escape route to sea surface is secured at all times.

Under the present application for patent, a pressure pipe enclosing the forward advance path of the continuous belt or pressure water conduit enclosed by the peripheral constituting materials surrounding the forward advance path is formed, where the section shape of the pipe/conduit is the same as the shape of the standing cup as it circulates along the forward advance path, while the gap between the two is reduced to eliminate water leaks and pressure leaks, so that a pressure water conduit can be formed that makes sure the flowing water pressure is received by the cup and the internal pressure is retained.

As for the forming of a pressure pipe enclosing the forward advance path 17a of the continuous belt 17 or pressure water conduit enclosed by the peripheral constituting materials surrounding the forward advance path, in Fig. 8 the peripheral constituting materials include the hard path surface 18 of the center body 20, interior surface of the floor plate 32, and left/right vertical bulkheads 90, and therefore the pressure water conduit 44 is such that these constituting materials are sealed against each other to form a water conduit and furthermore water leaks are prevented and pressure leaks are reduced in the space between the conduit and the standing cup as it circulates inside, while the internal pressure is retained to raise the efficiency.

For this purpose, the escape wheel 41 is shaped like a sheet and caused to slide, at both ends, along the narrow spaces sandwiched between the side walls of the center body 20 and the vertical bulkheads 90.

Also, Teflon (registered trademark) sheets, etc., may be attached in these spaces to achieve water lubrication (not illustrated).

In addition, the interior surface of the pressure water conduit is lined with hard mortal, metal or synthetic resin (not illustrated) to prevent wear due to water flows, while all gears are set in a gear chamber 47 partitioned by the vertical bulkhead 90 to cut off pressure, while shutting out contaminants in flowing water.

By using the pressure water conduit 44 that retains its internal pressure, the pressure difference between the inlet and outlet becomes such that, as the pressure slope is linear inside the pressure water conduit 44, the many standing cups inside receive a uniform differential pressure according to the number of cups and this roughly equal pressure acts effectively on all cups, which allows for utilization of high energy water, even when compressed to high pressure or flowing at high speed, as a large driving force effortlessly, without losses, and safely.

In addition, nothing is required in the pipe that would become an obstacle, and therefore the maximum efficiency is achieved.

Accordingly, the pressure water conduit 44 eliminates losses of flowing water energy and covers a wide range of flow velocities from high to low, and because the cup can be made stronger, high torque is generated and the cup size can be reduced to achieve higher performance.

Since the flowing water energy is equal to the pressure energy, the pressure water conduit 44 is used to make sure the law of energy conservation holds true at the openings on both ends, while the continuous belt is used to convert all of the energy inside to work by dynamic pressure.

In other words, the following equation is established: $W = P \times A \times V \times t$

Now, when P represents the pressure applied to the cup of the continuous belt and V represents the circulating velocity of the belt, then the work per unit time t is expressed by $W/t = P \times A \times V$.

Accordingly, the following relationships hold water: $W/t = 1/2 \times \rho \times A \times (U - V)^2 = P \times A \times V$

In addition, the flow velocity in the pipe, represented by V or V', corresponds to the circulating velocity V or V' and the discharge velocity V or V' according to the law of continuity, and when the cup receives a load and the pressure changes to P' and the circulating velocity changes to V', then the above relationships also change as follows:

$$W'/t = 1/2 \times \rho \times A \times (U - V')^2 = P' \times A \times V'$$

In light of this, W and W' are not the same because the energy of inflow water is used as the energy to push out water against the external pressure (normally zero) at the discharge outlet, indicating that all of the velocity energy of flowing water in the outside field is effectively converted to work.

This means that, the more the flowing water energy is used for translational movement or torque, the lower the flow velocity in the pipe V' becomes, which decreases the apparent loss and increases the efficiency.

While the maximum efficiency of a lift-type waterwheel conforms to the limit of 59.3% according to Betz's law because it adopts the conversion method based on kinetic energy, the pressure-based work conversion method allows for lessening of flow velocity in the pipe to achieve infinitely high efficiency as mentioned above and, for example, a reaction-type Francis waterwheel on land achieves a high efficiency of 90 to 95%.

Accordingly, a maximum efficiency beyond the limit according to Betz's law can be achieved by the continuous belt method using a pressure water conduit.

W, calculated by $W = K \times A \times U = K \times Q = 1/2 \times \rho \times Q \times U2$ (J/s), is equal to the kinetic energy ratio E and, needless to say, therefore, the kinetic energy becomes the same as the work based on dynamic pressure.

In Fig. 9, the pressure gradient obtained from the pressures at the inlet and outlet of the pressure water conduit 44, each divided by the distance of the pressure water conduit, is constant and, because this constant pressure gradient is divided into the number of identically shaped cups, an equal pressure difference seems to generate in each cup.

Accordingly, even when the water has very high energy, the force applied to one cup is small and controllable, and thus can be utilized, because the energy is equally divided into the number of cups in the pipe.

Also, by using the pressure water conduit 44, the difference between the pressures applied to the openings at both ends of the pipe can be utilized as external pressure energy.

Under the present application for patent, the negative pressure area generated by boundary layer separation behind a resistance object placed in flowing water is connected, via a pressure pipe, to the front face of the resistance object, so that the flowing water energy between the two ends of the pressure pipe can be increased by the negative pressure in the separation area which is added to the dynamic water pressure.

In Fig. 9, a negative pressure area 56 is generated behind a resistance object 58 placed in flowing water as a result of formation of discontinuous surface due to viscosity-triggered boundary layer separation.

Additionally, dynamic pressure corresponding to that at a stagnant point is generated on the front face of the resistance object, and therefore connecting these two water areas with the pressure water conduit 44 increases the dynamic pressure or kinetic energy representing the pressure difference between the two ends of the pressure water conduit 44, because the negative pressure in the separation area 56 is added to the original dynamic pressure.

As a result of the above, the energy density of flowing water in the outside field increases, and this increased energy density is utilized according to the dynamic pressure work method.

In Fig. 9, the reverse advance path is enclosed by the respective materials of the upper roof plate 50, hard path surface, left and right vertical bulkheads, and casing 54, so when a water conduit 55 is formed using these materials sealed against each other, the bottomless cup will lie down 6f even as the continuous belt circulates inside the water conduit 55, resulting in low shape resistance and generation of virtually no additional mass, and the water inside remains immovable and perched.

However, since the two ends of the water conduit 55 open into the mouths connected to the flow inlet 52 and flow outlet53, any increase in the pressure difference between these openings will cause the water conduit 55 to create the bypassing effect, resulting in a flow-back of perched water inside and eventually a drop in pressure difference in the pressure water conduit 44, and therefore to prevent the foregoing, air is injected into the water conduit 55 to create an air trap inside the casing 54 located at the highest position so that the perched water inside will be broken into the front part and rear part to block water and pressure fully.

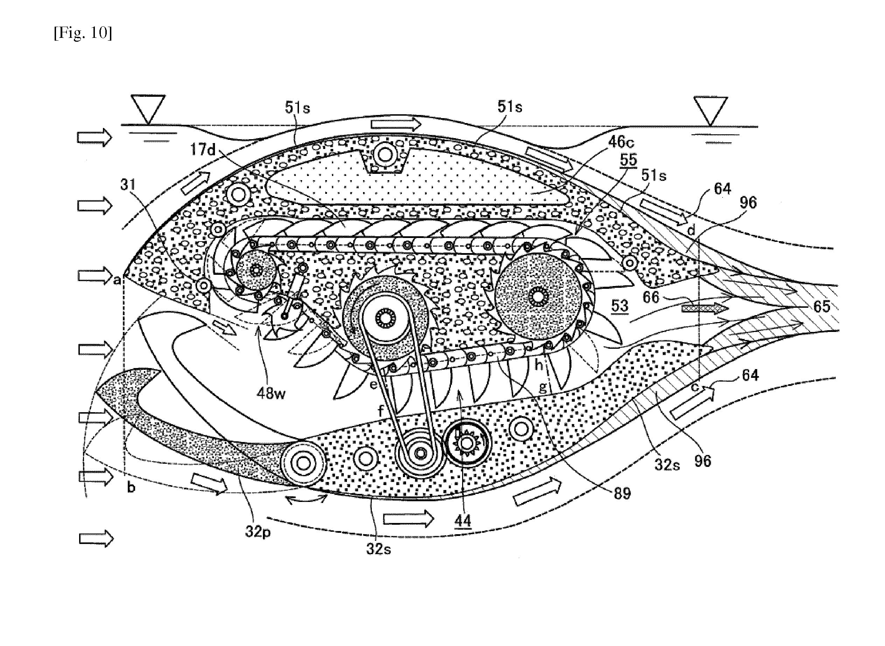

In Fig. 10, submerging a resistance object 60 of streamlined shape causes high-speed side flows 64 to generate on both side faces of the object, and these high-speed flows are kept from separating by giving the rear of the resistance object a streamlined shape, while they are also guided to a flow outlet 53 along the exterior surface according to the Coanda effect, so that when the flows are jetted from both sides of the flow outlet 53, the slow-moving water present inside will accelerate due to the viscosity of the high-speed jet flows and get suctioned out as entrained flowing water 66, thus generating suction vacuum in the water inside the flow outlet 53 and thereby increasing the energy due to pressure difference.

Accordingly, a large velocity difference may be created to form a boundary shearing surface 65 as a discontinuous surface receiving viscous shearing stress so as to generate reverse flow or eddy current to increase the negative pressure in the negative pressure area, or the injection angles of side flows may be adjusted to achieve an optimal mixing/dispersion effect so as to change the volume and intensity of entrained water.

As in the case mentioned earlier, the flow velocity around a vertical, cylindrical column, expressed by V, is calculated by $V = 2\sin\theta$, and when the side face has a $\theta$ of 90 degrees, the V becomes twice the flow velocity in the field.

This means that, when this water flowing at high speed is sandwichingly jetted from both sides of the flow outlet, the shearing force due to viscosity will increase as the flow velocity difference increases.

Incidentally, the calculations are such that, when twice the flow velocity in the field is added at the flow outlet, the total dynamic pressure becomes three times higher while the energy increases nine times, and consequently more energy than what is achievable with the aforementioned negative pressure area 56 can be obtained.

Also, the work conversion method based on dynamic pressure is such that when a large power generation load is applied to the common shaft 26, a large torque T acts upon the driving gear to decrease the circulating velocity V of the continuous belt while also decreasing the velocity V of outflow water, and the result is a greater suction vacuum effect.

This is similar to what happens when utilizing negative pressure through the suction pipe of a reaction-type waterwheel, where the difference is that, while negative pressure is generated by the weight of the water column in the former case, negative pressure is generated by viscosity in the latter case.

Accordingly, the energy density can be raised even where the flowing water energy is low, which makes this method truly significant as it permits local power generation for local consumption anywhere.

In Fig. 10, an inflow door 32p forward of the floor plate 32 is made rotatable and its angle of rotation is manipulated to adjust the inflow water volume, where the inflow door 32p is primarily used to adjust the overall balance of a long device layout when adjusting the capacity differences among the individual devices.

When a long device is installed across a river, the following will become possible, for example: large openings can be provided at both ends away from the mainstream area at the center in order to increase the inflow water volume; when one unit constituting the long device is fully stopped, the other devices are not affected because the one-way clutch 27 of the common shaft 26 is actuated, so the inflow door 32p of the faulty device can be closed or opened halfway to allow a diver to conduct repair inside; or in the case of very stormy weather, the doors before and after the problem part can be closed to protect the continuous belt 17 inside.

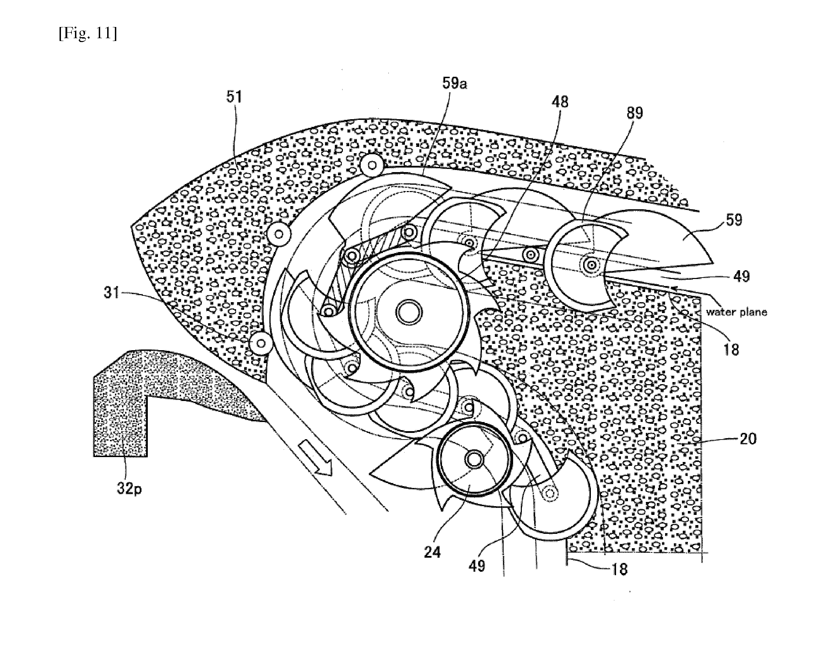

In Fig. 11, the curved surface of the sheet-shaped lead wheel 48 is used to completely block water between the endless chain waterwheel and the surrounding wall surface so as not to generate bypassing water flow inside the sealed water conduit, and because a pressure-receiving member 59 stands on the top face of a sheet-shaped belt 49 to block water on the inside, bypass flow enters between this standing position and the guide roller 31, and therefore the open angle of the inflow door 32p is adjusted to create high-speed inflow water jet and the aforementioned section is covered to prevent bypassing water flow in exactly the opposite direction to the water flowing at high speed.

As for the flow velocity generating in the pipe as a result of pressure conversion, the flow volume enters through the inflow door provided at the flow inlet and therefore the open angle of the inflow door is adjusted to raise the inflow velocity to create high-speed jet flow; however, the flow volume is far smaller compared to the lift type.

In addition, the water entering from the bottom face of the bottomless cup due to bypassing flows in exactly the opposite direction to this jet flow, so by using high-speed jet flows to cover this reverse flowing water, the reverse flowing water is suppressed by the jetting force or viscosity and blocked, and by combining this with a means for blocking water on the exterior surface of and inside the sheet-shaped belt, bypassing is prevented. Additionally, while sufficient absorption of flowing water energy has not been possible with the drag type, which uses an open water path to receive flowing water in the outside field, due to overflowing or eddying of the water flowing into the cup, the pressure type does not generate disturbed inflow much even when the intervals of the pressure-receiving members are reduced, because a pressure trap is created and the inflow water volume is small.

Accordingly, the intervals of these members are reduced to shorten the traveling path, while in the reverse advance path the pressure-receiving members are overlapped with each other 17d, and consequently the distance to be blocked along the aforementioned turning path is shortened.

Compared to when bypassing is prevented with an air trap, the streamlined shape with a low top plate makes flow separation from the surface difficult.

In Fig. 11, the back of the pressure-receiving member 59a is pressed by centrifugal force against the rollers 31 provided on the cylindrical inner surface of the water-blocking plate, and the reaction causes the bottom face of the sheet-shaped belt 49 to be pressed against the circular path surface 18 of the lead wheel and therefore water is blocked between the upper and lower projected parts and constricted part, and because coasters 89 are sliding in the traveling groove by blocking the groove and thereby blocking water at both side faces, water is blocked simultaneously between all pressure-receiving members 59 and surrounding wall surfaces.

On the inside, the action of two-level lead wheels 48w comprising the sheet-shaped lead wheels 48 and tensioners 24 causes the pressure-receiving member 59 to stand on the top face of the sheet-shaped belt 49, blocking the bottom face and thereby blocking water, and therefore the open angle of the inflow door 32p is adjusted to obtain high-speed inflow water jet and the turning path is covered with flowing water film between the guide roller 31 and the point where the bottom face is blocked, to isolate the inner inflow water area.

It should be noted that the circular path surface of the lead wheel can be made rotatable.

In addition, the bottom face of the pressure-receiving member at any position indicated by the dotted lines behind the two-level lead wheels 48w in Fig. 10 is completely blocked.

The inflow door 32p is provided for each individual unit or short device, and it may be closed in a moored state to stop the unit that has become faulty, or all doors may be closed in the event of typhoon to protect the devices inside.

As for the flow velocity generated in the pipe as a result of pressure conversion, the flow volume enters through the inflow door provided at the flow inlet; however, the flow volume is far lower compared to the lift type.

**Industrial Field of Application**

The present invention can be applied to waterwheels installed under flowing water at sea or in lakes, and can be applied as power generation devices.

**Claims**

**1.** A drag-type water power conversion device which is an underwater waterwheel, the waterwheel being a rotary waterwheel that rotates around a rotating shaft or an endless chain waterwheel in which a continuous belt is stretched between a pair of escape wheels, said waterwheel **characterized in that** a bottomless cup is pivotally fitted by a pivot on an outer wheel of the rotary waterwheel or on the continuous belt of the endless chain waterwheel so as to be able to stand up or lie down, and in a state where the outer wheel or the continuous belt advances in a same direction as a direction of flowing water, the bottomless cup goes into a standing state, a bottom of the cup is closed by a bottom plate provided on the outer wheel or the continuous belt, and the cup functions as a water-receiving cup having high flowing water resistance, while in a state where the outer wheel or the continuous belt advances in a reverse direction to the direction of flowing water, the bottomless cup goes into a lying down state, the bottom of the cup goes into an open state, thereby flowing water resistance becomes lower, the bottomless cup rotates or circulates by a resistance difference between both states, and by providing a water-blocking plate on an upstream side on which the bottomless cup goes into the lying down state, a stagnant water area is formed in a reverse advance path to cause centrifugal force to act on the bottomless cup and turn the bottomless cup from the lying down state to the standing state.

2. A water power conversion device according to Claim 1, **characterized in that** it is an endless chain waterwheel where a path surface of the continuous belt is formed all around a center body having underwater buoyancy and the continuous belt is passed on it so as to circulate, while the respective escape wheels are secured at both ends of an escape wheel shaft installed in a manner passing through the center body between its two side faces, and projecting shafts formed on both sides of the continuous belt are meshed with sprockets provided on the escape wheels, to convert flowing water energy to rotational force of the escape wheel shaft.

3. A water power conversion device according to Claim 2, **characterized in that** the center body is extended forward and upward from the escape wheel on an upstream side, while its bottom face is made a reverse inclined surface, and a small lead wheel is provided at a forward extended part to improve a centrifugal force acting on the bottomless cup, or an inner side of the water-blocking plate is shaped as a cylinder of small inner diameter and the small lead wheel is turned inside, or in a weak flow velocity area, two-level lead wheels are constituted using lead wheels and tensioners, or the bottomless cup is let drop naturally along the reverse inclined surface around the pivot, in order to turn the bottomless cup.

4. A water power conversion device **characterized in that** two or more units of the aforementioned endless chain waterwheel are connected together using connecting parts and arranged in parallel in a floating state to constitute a long device, where a separately provided external floating body is fitted with support columns and mooring parts and the connecting parts are connected to the support columns, with mooring ropes tightly bound to the mooring parts, and a rotational force generating on the escape wheel shaft provided on each of the units is output to a common shaft.

5. A water power conversion device according to Claim 4, **characterized in that** a short device is formed which is an endless chain waterwheel whose multiple escape wheel shafts are integrated into one common driving shaft of practical length, and a space is formed between vertical bulkheads of adjacent short devices for use as a gear chamber, and speed conversion gears and one-way clutches are provided along a torque transmission path from the common driving shaft to the common shaft and set in the gear chamber.

6. A water power conversion device according to Claim 2, **characterized in that** a circulating path of a fully submerged continuous belt is divided into two paths on an upper side and a lower side, where each path has a flow inlet and a flow outlet at both ends, and the flow outlet is formed with a movable-type or fixed-type water-blocking plate so that, of the upper path and lower path, one functions as a forward advance path through which water flows in from the flow inlet, while the other functions as a reverse advance path in which inflow water is blocked and the bottomless cup is turned, and the water-blocking plate is used to alternately and automatically switch the functions of the paths.

7. A water power conversion device according to any one of Claims 1 to 6, **characterized in that** the aforementioned underwater waterwheel or endless chain waterwheel is constructed using a composite body of watertight, lightweight concrete made by blending hollow bodies with sealed surface shell walls into a water-tightening cement binder and then consolidating the mixture, or a joined body combining the watertight, lightweight concrete with a steel-reinforced structure is used, to let the waterwheel float on its own.

8. A water power conversion device according to Claim 5, **characterized in that** an endless chain waterwheel is provided between a top plate and a floor plate, one escape wheel is provided at a center of the endless chain waterwheel, and outermost sprockets are simultaneously meshed with projecting shafts of the continuous belt circulating along upper and lower paths, where gears for transmitting torque are stored in the gear chamber and the common shaft is lowered to a position of the floor plate to exert weight restoration force, while the top plate positioned at a very top has buoyancy to let the waterwheel float on its own.

9.  A water power conversion device according to Claim 4, **characterized in that** the external floating body is a partially submerged platform having a partially submerged shell structure constituted by a horizontally long, spindle-type pressure-resistant submersible shell integrally connected with a thin, long column projecting above water, where support columns and mooring parts are provided on an exterior of the pressure-resistant submersible shell, while a partially submerged work chamber and opening to outside water are provided on an interior of the pressure-resistant submersible shell, and ballasts or heavy objects can be loaded at a bottom of the shell.

10. A pressure-type water power conversion device **characterized in that** it is an endless chain waterwheel according to Claim 2, where the forward advance path has multiple pressure-receiving members that move inside a water conduit closed by surrounding wall and path surfaces in a manner shielding an interior section of the conduit, and where an output means for converting circulating pull force and traveled distance to rotational force is provided that has a sheet-shaped belt sealing between top and bottom spaces along the path surface with the sheet-shaped belt having multiple shafts projecting from ends on both sides, where the shafts are fitted with coasters and the coasters are connected together and caused to slide by blocking water, while the pressure-receiving members are pivotally fitted on a top side of the sheet-shaped belt and an endless chain is provided on a bottom side of the sheet-shaped belt to allow for water-lubricated travel.

11. A pressure-type water power conversion device according to Claim 10, **characterized in that** the forward advance path is covered with a pressure pipe or pressure water conduit and the reverse advance path is sealed from a side face of the pressure pipe to provide a sealed water conduit, and by blocking flowing water generated by bypassing of the sealed water conduit, a negative pressure generating in a flow outlet area of the water conduit to which the aforementioned pressure is applied can be utilized as pressure difference in addition to dynamic pressure at a flow inlet.

12. A pressure-type water power conversion device according to Claim 11, **characterized in that**, by submersing and securing in flowing water an endless chain waterwheel having the aforementioned pressure pipe or pressure water conduit and also having a streamlined shape around its top face, bottom face, and both side faces, high-speed side flows are jetted toward a rear of the flow outlet of the pressure pipe or pressure water conduit to produce a suction effect and thereby make pressure in the flow outlet area negative.

13. A pressure-type water power conversion device according to Claim 11, **characterized in that** there are rollers installed on a cylindrical inner surface of the water-blocking plate, a back of the pressure-receiving member is pressed by centrifugal force against the rollers, and a reaction causes a bottom face of the sheet-shaped belt to be pressed against a circular path surface of a lead wheel and therefore water is blocked where an upper part and a lower part contact each other and the coasters on both side faces slide by blocking water, whereas water is blocked on an inside by a standing of the pressure-receiving member on a top face of the sheet-shaped belt by two-level lead wheels, and although bypassing flowing water enters between the standing position of the pressure-receiving member and the guide roller, an inflow door of adjustable open angle is provided at the water inlet of the aforementioned pressure pipe and high-speed inflow water jet is created by the inflow door to suppress bypassing water flowing in an opposite direction.

[Fig. 1]

EP 2 921 693 A1

[Fig. 2]

[Fig. 3]

[Fig. 4]

EP 2 921 693 A1

[Fig. 5]

EP 2 921 693 A1

[Fig. 6]

EP 2 921 693 A1

[Fig. 7]

EP 2 921 693 A1

[Fig. 8]

[Fig. 9]

EP 2 921 693 A1

EP 2 921 693 A1

[Fig. 10]

32

[Fig. 11]

EP 2 921 693 A1

[Fig. 12]

**INTERNATIONAL SEARCH REPORT**

| | International application No. |
|---|---|
| | PCT/JP2013/078588 |

A. CLASSIFICATION OF SUBJECT MATTER
*F03B9/00*(2006.01)i, *F03B7/00*(2006.01)i, *F03B13/26*(2006.01)i

According to International Patent Classification (IPC) or to both national classification and IPC

B. FIELDS SEARCHED

Minimum documentation searched (classification system followed by classification symbols)
F03B9/00, F03B7/00, F03B13/26

Documentation searched other than minimum documentation to the extent that such documents are included in the fields searched
Jitsuyo Shinan Koho 1922–1996 Jitsuyo Shinan Toroku Koho 1996–2014
Kokai Jitsuyo Shinan Koho 1971–2014 Toroku Jitsuyo Shinan Koho 1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 3069492 U (Ken'ichi SATO), 23 June 2000 (23.06.2000), entire text; all drawings (Family: none) | 1-13 |
| A | Microfilm of the specification and drawings annexed to the request of Japanese Utility Model Application No. 35570/1975(Laid-open No. 116346/1976) (Kabushiki Kaisha Kobayashi Gijutsu Kenkyusho), 21 September 1976 (21.09.1976), entire text; all drawings (Family: none) | 1-13 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January, 2014 (20.01.14) | 28 January, 2014 (28.01.14) |

| Name and mailing address of the ISA/ Japanese Patent Office | Authorized officer |
|---|---|
| Facsimile No. | Telephone No. |

Form PCT/ISA/210 (second sheet) (July 2009)

# EP 2 921 693 A1

**INTERNATIONAL SEARCH REPORT**

International application No.

PCT/JP2013/078588

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2009-68439 A (Yugen Kaisha CSC Labo), 02 April 2009 (02.04.2009), entire text; all drawings (Family: none) | 1-13 |
| A | JP 58-220972 A (Deviddo Maiya Suronimu), 22 December 1983 (22.12.1983), entire text; all drawings (Family: none) | 1-13 |
| A | JP 59-108879 A (Yasuo EDO), 23 June 1984 (23.06.1984), entire text; all drawings (Family: none) | 1-13 |
| A | JP 57-151074 A (Yugen Kaisha Hokuto Seisakusho), 18 September 1982 (18.09.1982), entire text; all drawings (Family: none) | 1-13 |
| A | JP 2009-222047 A (Mitsuhiro TOYAMA), 01 October 2009 (01.10.2009), entire text; all drawings (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4917690 B

**Non-patent literature cited in the description**

- Haryoku Hatsuden. Kairyuu/Chouryuu Hatsuden Shisutemu. Power Co., Ltd, 7

- Zukai Fuuryoku Hatsuden No Subete - Fuusha No Kiso Chishiki. Kogyo Chosakai Publishing Co., Ltd, 48